(19)

Europäisches
Patentamt
European
Patent Office
Office européen
des brevets

(11) **EP 4 542 501 A1**

(12) **EUROPEAN PATENT APPLICATION**

(43) Date of publication:
**23.04.2025  Bulletin 2025/17**

(21) Application number: **24202861.1**

(22) Date of filing: **26.09.2024**

(51) International Patent Classification (IPC):
*G06T 15/06* (2011.01)         *G06T 15/40* (2011.01)

(52) Cooperative Patent Classification (CPC):
**G06T 15/06; G06T 15/40;** G06T 2210/21

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023  GB 202315023**

(71) Applicant: **Imagination Technologies Limited
Kings Langley, Hertfordshire WD4 8LZ (GB)**

(72) Inventors:
• **Smith-Lacey, Peter
  Kings Langley, WD4 8LZ (GB)**
• **Fenney, Simon
  Kings Langley, WD4 8LZ (GB)**

(74) Representative: **Slingsby Partners LLP
1 Kingsway
London WC2B 6AN (GB)**

(54) **INTERSECTION TESTING IN A RAY TRACING SYSTEM**

(57)    There is provided a method of processing a primitive as part of intersection testing in a ray tracing system, the primitive being defined by an ordered set of vertices. The method comprising receiving (i) data defining a direction and an origin of a ray to be tested against the primitive, and (ii) coordinate data for a set of two or more of the vertices, the set of two or more vertices defining at least one edge of the primitive. The method further comprises projecting the coordinate data for the set of two or more vertices into ray space using the ray data, wherein the ray space has two non-parallel axes that are both transverse to the direction of the ray, wherein a ray-space frame of reference associated with the two non-parallel axes is centred at a point on the ray such that the ray is represented as that point on the two non-parallel axes in the ray space, and wherein the point is an origin of the ray space. Then, the signs of the coordinate data for the set of two or more vertices in ray space are analysed to determine whether a non-intersection condition is fulfilled, wherein fulfilment of the non-intersection condition indicates that the ray does not intersect the primitive. In response to determining that the non-intersection condition is fulfilled, it is determined that the ray does not intersect the primitive.

FIGURE 3

EP 4 542 501 A1

**Description**

CROSS-REFERENCE TO RELATED APPLICATON

This application claims priority from UK patent application GB2315023.8 filed on 29 September 2023, which is herein incorporated by reference in their entirety.

TECHNICAL FIELD

The present disclosure is directed to a method of processing a primitive as part of intersection testing in a ray tracing system, the primitive being defined by an ordered set of vertices, and to an intersection testing module that is configured to perform processing of a primitive as part of intersection testing in a ray tracing system.

BACKGROUND

Ray tracing is a computational rendering technique for generating an image of a scene by tracing paths of light from the viewpoint of a camera through the scene. The paths of light may otherwise be referred to as rays. Each ray is modelled as originating from the camera and passing through a pixel into the scene. As a ray traverses the scene it may intersect objects within the scene. The interaction between a ray and an object it intersects can be modelled to create realistic visual effects. For example, in response to determining an intersection of a ray with an object, a shader program may be executed in respect of the intersection. A programmer can write the shader program to define how the system reacts to the intersection which may, for example cause one or more secondary rays to be emitted into the scene. For example, secondary rays may represent a reflection of the ray off the intersected object or a refraction of the ray through the object if the object is transparent or translucent. As another example, the shader program could cause one or more rays to be emitted into the scene for the purposes of determining whether the object is in shadow at the intersection point. The result of executing the shader program (and processing the relevant secondary rays) can be the calculation of a colour value for the pixel the ray passed through.

Rendering an image of a scene using ray tracing may involve performing many intersection tests of different rays against the objects present in the scene. A ray tracing system may implement billions of intersection tests to render an image of a scene. Intersection testing typically involves complex floating-point arithmetic which is computationally intensive and, where the ray tracing system is implemented in hardware, requires a large amount of physical silicon area. Thus, methods for reducing the power consumption, hardware requirements and latency of intersection testing are desirable.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a method of performing intersection testing of a ray in respect of a primitive in a ray tracing system, the primitive being defined by an ordered set of vertices, the method comprising:

receiving (i) data defining a direction and an origin of the ray to be tested against the primitive, and (ii) coordinate data for a set of two or more of the vertices, the set of two or more vertices defining at least one edge of the primitive;

projecting the coordinate data for the set of two or more vertices into ray space using the ray data, wherein the ray space has two non-parallel axes that are both transverse to the direction of the ray, wherein a ray-space frame of reference associated with the two non-parallel axes is centred at a point on the ray such that the ray is represented as that point on the two non-parallel axes in the ray space, and wherein the point is an origin of the ray space;

analysing signs of the coordinate data for the set of two or more vertices in ray space to determine whether a non-intersection condition is fulfilled, wherein fulfilment of the non-intersection condition indicates that the ray does not intersect the primitive; and

in response to determining that the non-intersection condition is fulfilled, determining that the ray does not intersect the primitive.

There is provided a method of performing intersection testing of a ray in respect of a primitive in a ray tracing system, the primitive being defined by an ordered set of vertices, the method comprising:

receiving (i) data defining a direction and an origin of the ray to be tested against the primitive, and (ii) coordinate data for a set of two or more of the vertices, the set of two or more vertices defining at least one edge of the primitive; projecting the coordinate data for the set of two or more vertices into ray space using the ray data, wherein the ray space has two non-parallel axes that are both transverse to the direction of the ray, wherein a ray-space frame of reference associated with the two non-parallel axes is centred at a point on the ray such that the ray is represented as that point on the two non-parallel axes in the ray space, and wherein the point is an origin of the ray space; analysing signs of the coordinate data for the set of two or more vertices in ray space to determine whether a non-intersection condition is fulfilled, wherein fulfilment of the non-intersection condition indicates that the ray does not intersect the primitive; and

in response to determining that the non-intersection condition is not fulfilled, performing further intersection testing in respect of the ray on the primitive.

Said analysing signs of the coordinate data for the set of two or more vertices in ray space may be performed without having previously performed any floating-point calculations as part of the intersection testing of the ray in respect of the primitive.

The method may further comprise performing a zero comparison on the coordinate data for each vertex of the set of two or more vertices.

The signs of the coordinate data for the set of two or more vertices in ray space may indicate the orientation of the at least one edge of the primitive.

The signs of the coordinate data for the set of two or more vertices in ray space may be used to determine the winding order of the primitive.

The set of two or more vertices may comprise a first pair of vertices that defines a first edge of the primitive, and said analysing signs of the coordinate data for the set of two or more vertices in ray space may comprise determining whether:

the sign of a first coordinate for a first vertex of the first pair of vertices, in ray space, is different from the sign of a first coordinate for a second vertex of the first pair of vertices and that the sign of a second coordinate for the first vertex of the first pair of vertices, in ray space, is the same as the sign of a second coordinate for the second vertex of the first pair of vertices; or

the sign of the second coordinate for the first vertex of the first pair of vertices, in ray space, is different from the sign of the second coordinate for the second vertex of the first pair of vertices and that the sign of the first coordinate for the first vertex of the first pair of vertices, in ray space, is the same as the sign of the first coordinate for the second vertex of the first pair of vertices.

The analysis of the signs of the coordinate data for first pair of vertices in ray space may be used to determine the orientation of the first edge of the primitive.

The non-intersection condition may be fulfilled if the orientation of the first edge of the primitive matches a predetermined orientation, the predetermined orientation indicating that the ray does not intersect a primitive comprising an edge that has that orientation.

The orientation of the first edge of the primitive may be defined according to an orientation of the two non-parallel axes, the orientation of two non-parallel axes being indicated by a data flag that is used to translate the coordinates of the first pair of vertices in ray space.

The data flag may be a single bit.

The set of two or more vertices may be a set of three or more vertices forming at least two pairs of vertices, the first pair of vertices defining the first edge of the primitive and a second pair of vertices defining a second edge of the primitive, and said analysing signs of the coordinate data for the set of two or more vertices in ray space may comprise determining whether:

the sign of a first coordinate for a first vertex of the second pair of vertices, in ray space, is different from the sign of a first coordinate for a second vertex of the second pair of vertices and that the sign of a second coordinate for the first vertex of the second pair of vertices, in ray space, is the same as the sign of a second coordinate for the second vertex of the second pair of vertices; or

the sign of the second coordinate for the first vertex of the second pair of vertices, in ray space, is different from the sign of the second coordinate for the second vertex of the second pair of vertices and that the sign of the first coordinate for the first vertex of the second pair of vertices, in ray space, is the same as the sign of the first coordinate for the second vertex of the second pair of vertices.

The analysis of the signs of the coordinate data for the first and second pair of vertices in ray space may be used to determine the orientations of the first and second edges of the primitive.

The non-intersection condition may be fulfilled if the orientation of the first edge of the primitive is different from the orientation of the second edge of the primitive.

The set of two or more vertices may be a complete set of ordered vertices that define the primitive.

Said analysing signs of the coordinate data for the set of two or more vertices in ray space may comprise analysing the signs of at least a first coordinate, in ray space, for all of the vertices in the complete set of vertices that define the primitive.

The non-intersection condition may be fulfilled if at least one of the following is true:

the sign of a first coordinate, in ray space, is the same for all of the vertices in the complete set of ordered vertices; or
the sign of a second coordinate, in ray space, is the same for all of the vertices in the complete set of ordered vertices.

The coordinate data for each vertex of the set of two or more vertices, in ray space, may comprise:

a first coordinate along a first axis of the two non-parallel axes; and
a second coordinate along a second axis of the two non-parallel axes.

The first non-parallel axis may be perpendicular to the second non-parallel axis in ray space, and both the first and the second non-parallel axes may be perpendicular to the direction of the ray.

If it is determined that the ray does not intersect the primitive, then no further intersection testing may be performed in respect of the ray for that primitive.

The method may be used to render an image of a scene.

There is provided an intersection testing module for performing intersection testing of a ray in respect of a primitive in a ray tracing system, the primitive being defined by an ordered set of vertices, the intersection testing module being configured to:

receive (i) data defining a direction and an origin of the ray to be tested against the primitive, and (ii) coordinate data for a set of two or more of the vertices, the set of two or more vertices defining at least one edge of the primitive;
project the coordinate data for the set of two or more vertices into ray space using the ray data, wherein the ray space has two non-parallel axes that are both transverse to the direction of the ray, wherein a ray-space frame of reference associated with the two non-parallel axes is centred at a point on the ray such that the ray is represented as that point on the two non-parallel axes in the ray space, and wherein the point is an origin of the ray space;
analyse signs of the coordinate data for the set of two or more vertices in ray space to determine whether a non-intersection condition is fulfilled, wherein fulfilment of the non-intersection condition indicates that the ray does not intersect the primitive; and
in response to determining that the non-intersection condition is fulfilled, determine that the ray does not intersect the primitive.

The intersection testing module may be further configured to, in response to determining that the non-intersection condition is not fulfilled, perform further intersection testing in respect of the ray on the primitive.

There is provided a method of processing a primitive for intersection testing in a ray tracing system, the primitive being defined by an ordered set of vertices, the method comprising:

receiving (i) data defining a ray to be tested against a primitive, and (ii) coordinate data for a set of three or more vertices, the set of three or more vertices defining the primitive;
for each vertex of the primitive, using coordinate data of that vertex to determine a distance component of the vertex along the length of the ray;
comparing the determined distance component of each of the vertices to at least one of a minimum and a maximum valid distance value for the ray; and
determining that the ray does not intersect the primitive in response to either:

determining that the determined distance components for all of the vertices of the primitive are less than the minimum valid distance; or
determining that the determined distance components for all of the vertices of the primitive are greater than the maximum valid distance.

The method may further comprise comparing the determined distance component of each of the vertices to both of the minimum and maximum valid distance values for the ray.

The distance component of each vertex may be determined by observing a first coordinate of each of the vertices.

The ray may be represented using a ray direction vector, and the first coordinate may be along an axis that corresponds to the component of the ray direction vector that has the largest magnitude.

Comparing the determined distance component of each of the vertices to at least one of a minimum and a maximum valid distance value for the ray may comprise observing the coordinate data for the vertices in a space-coordinate system in which the primitive is defined.

The method may further comprise projecting the coordinate data for the set of three or more vertices into ray space using the ray data, wherein the ray space has two non-parallel axes that are both transverse to the direction of the ray, a ray-space frame of reference associated with the two non-parallel axes is centred at a point on the ray such that the ray is represented as that point on the two non-parallel axes in the ray space, and wherein the point is an origin of the ray space.

The comparison of the determined distance component of each of the vertices to at least one of a minimum and a maximum valid distance value for the ray may be performed based on the projected coordinate data.

The ray may be represented using a ray direction vector, and the method may further comprise using the projected coordinate data to calculate an indication of a coordinate value for each vertex along an axis in the space-coordinate system for which the component of the ray direction vector has the largest magnitude.

Calculating the indication of a coordinate value for a vertex along the axis in the space-coordinate system for which the component of the ray direction vector has the largest magnitude may comprise scaling the coordinate value by said component of the ray direction vector having the largest magnitude.

Scaling the coordinate value by said component of the ray direction vector having the largest magnitude may be performed such that:

$$r_i' = \frac{1}{D_{maj}} r_i$$

where $r_i$ is the coordinate of an $i^{th}$ vertex , $D_{maj}$ is said component of the ray direction vector having the largest magnitude and $r_i'$ is the rescaled vertex coordinate of the $i^{th}$ vertex.

The ray may be represented using a ray direction vector, and the method may comprise scaling the minimum and maximum valid distance values for the ray using the component of the ray direction vector having the largest magnitude.

Scaling the minimum and maximum valid distance values for the ray may comprise multiplying the minimum and maximum valid distance values by the component of the ray direction vector having the largest magnitude.

Rescaling the minimum valid distance value for the ray may be performed such that:

$$t_{min}' = D_{maj} t_{min}$$

where $t_{min}$ is the minimum valid distance value for the ray, $D_{maj}$ is major component of the ray direction and $t_{min}'$ is the rescaled minimum valid distance value for the ray.

Rescaling the maximum valid distance value for the ray may be performed such that:

$$t_{max}' = D_{maj} t_{max}$$

where is $t_{max}$ is the maximum valid distance value for the ray, $D_{maj}$ is major component of the ray direction and $t_{min}'$ is the rescaled maximum valid distance value for the ray.

In response to determining that the ray does not intersect the primitive, no further intersection testing may be performed in respect of the ray for that primitive.

The method may be used to render an image of a scene.

There is provided an intersection testing module for processing a primitive as part of intersection testing in a ray tracing system, the primitive being defined by an ordered set of vertices, the intersection testing module being configured to:

receive (i) data defining a ray to be tested against a primitive, and (ii) coordinate data for a set of three or more vertices, the set of three or more vertices defining the primitive;

for each vertex of the primitive, use coordinate data of that vertex to determine a distance component of the vertex along the length of the ray;
compare the determined distance component of each of the vertices to at least one of a minimum and a maximum valid distance value for the ray; and
determine that the ray does not intersect the primitive in response to either:

determining that the determined distance components for all of the vertices of the primitive are less than the minimum valid distance; or
determining that the determined distance components for all of the vertices of the primitive are greater than the maximum valid distance.

The intersection testing module may be further configured to perform further intersection testing in respect of the ray on the primitive in response to determining that: (i) it is not the case that the determined distance components for all of the vertices of the primitive are less than the minimum valid distance, and (ii) it is not the case that the determined distance components for all of the vertices of the primitive are greater than the maximum valid distance.

The intersection testing module may be further configured to compare the determined distance component of each of the vertices to both of the minimum and maximum valid distance value for the ray.

The ray may be represented using a ray direction vector, and the determined distance component of each vertex may be determined by observing a first coordinate of each of the vertices, the first coordinate being along an axis that corresponds to the component of the ray direction vector that has the largest magnitude.

The intersection testing module may be configured to compare the determined distance component of each of the vertices to at least one of a minimum and a maximum valid distance value for the ray by observing the coordinate data for the vertices in a space-coordinate system in which the primitive is defined.

The intersection testing module may be further configured to project the coordinate data for the set of three or more vertices into ray space using the ray data, wherein the ray space has two non-parallel axes that are both transverse to the direction of the ray, a ray-space frame of reference associated with the two non-parallel axes is centred at a point on the ray such that the ray is represented as that point on the two non-parallel axes in the ray space, and wherein the point is an origin of the ray space, wherein the comparison of the determined distance component of each of the vertices to at least one of a minimum and a maximum valid distance value for the ray may be performed using the projected coordinate data.

The intersection testing module may be embodied in hardware on an integrated circuit. There may be provided a method of manufacturing, at an integrated circuit manufacturing system, an intersection testing module. There may be provided an integrated circuit definition dataset that, when processed in an integrated circuit manufacturing system, configures the system to manufacture an intersection testing module. There may be provided a non-transitory computer readable storage medium having stored thereon a computer readable description of an intersection testing module that, when processed in an integrated circuit manufacturing system, causes the integrated circuit manufacturing system to manufacture an integrated circuit embodying an intersection testing module.

There may be provided an integrated circuit manufacturing system comprising: a non-transitory computer readable storage medium having stored thereon a computer readable description of the intersection testing module; a layout processing system configured to process the computer readable description so as to generate a circuit layout description of an integrated circuit embodying the intersection testing module; and an integrated circuit generation system configured to manufacture the intersection testing module according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows a ray tracing system configured to perform intersection testing for each of a plurality of rays against nodes of a hierarchical acceleration structure;

Figure 2 shows the intersection between a ray and a primitive in world space.

Figure 3 shows the projection the primitive of Figure 2 into ray space;

Figure 4 shows a first method of processing a primitive as part of intersection testing in a ray tracing system;

Figure 5 shows a first sub-method for analysing the signs of coordinate data as illustrated in Figure 4;

Figure 6 shows a second sub-method for analysing the signs of coordinate data as illustrated in Figure 4;

Figure 7 shows a primitive that can be culled using the method illustrated in Figure 5;

Figure 8 shows a primitive that can be culled using the method illustrated in Figure 6;

Figure 9 shows a third sub-method for analysing the signs of coordinate data as illustrated in Figure 4;

Figure 10 shows a primitive that can be culled using the method illustrated in Figure 9;

Figure 11 shows a second method of processing a primitive as part of intersection testing in a ray tracing system;

Figure 12 shows a primitive that can be culled using the method illustrated in Figure 11;

Figure 13 shows a computer system in which the intersection testing module of Figure 1 is implemented; and

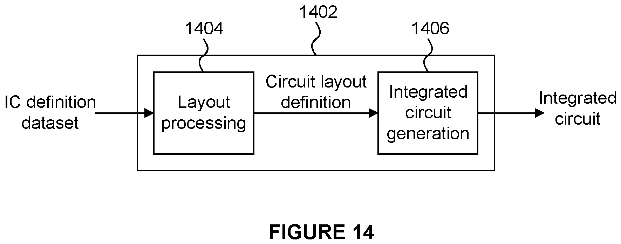

Figure 14 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.
Embodiments will now be described by way of example only.

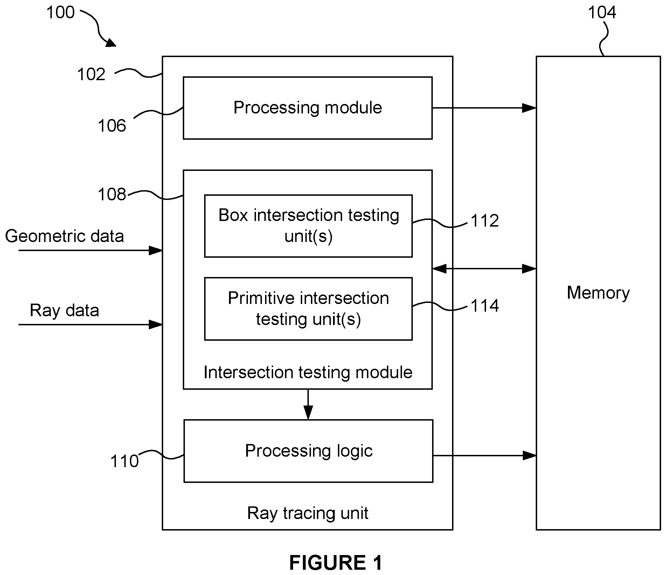

Figure 1 shows a ray tracing system 100 that is configured to perform intersection testing. Intersection testing is performed to render an image in a scene. Rendering an image of a scene using ray tracing may involve performing many intersection tests. The ray tracing system comprises a ray tracing unit 102 and a memory 104. The ray tracing unit 102 comprises a processing module 106, an intersection testing module 108 and processing logic 110. The intersection testing module 108 comprises one or more box intersection testing modules 112, and one or more primitive intersection testing modules 114. In operation the ray tracing unit 102 receives geometric data defining objects within the 3D scene. The processing module 106 is configured to generate an acceleration structure based on the geometric data, and to send the acceleration structure to the memory 104 for storage therein. After the acceleration structure has been stored in the memory 104, the intersection testing module 108 can retrieve nodes of the acceleration structure from the memory 104 to perform intersection testing of rays against the retrieved nodes. The results of the intersection testing are provided to the processing logic 110. The processing logic 110 is configured to process the results of the intersection testing to determine processed values representing the image of the 3D scene. The processed values determined by the processing logic 110 can be passed back to the memory 104 for storage therein to represent the image of the 3D scene.
Generally, when performing intersection testing of a ray with a primitive, the ray is defined in terms of components (i.e., coordinates) in a space-coordinate system in which the primitive is defined. However, ray data that defines a ray may be used to derive a ray-coordinate system which is relative to the ray itself, such that primitives that are to be tested against a given ray can be mapped onto the ray-coordinate system derived from the data of that ray. The term "space-coordinate system" is used herein to refer to the coordinate system in which the primitive is defined. The "space-coordinate system" may be a world space-coordinate system or an instance space-coordinate system. In most of the examples described herein the space-coordinate system is a three-dimensional coordinate system. The shape, size and position of a primitive may be defined as a region of three-dimensional space contained entirely within a plane of the three-dimensional coordinate system and may be bounded by $n \geq 3$ line segments. Each of the interior angles of the primitive may be less than or equal to 180°. Primitives with all interior angles of less than or equal to 180° are referred to as convex polygons. A strictly convex polygon is a convex polygon such that all interior angles are strictly less than 180°.
The terms "ray-coordinate system" and "ray space", are used herein to refer to a coordinate system that is specific to a ray, and which has its origin on the ray. In the examples described in detail herein the origin of the ray-coordinate system is the origin of the ray, but in other examples, any point on the ray (i.e. any point along the ray's line) could be used as the origin of the ray-coordinate system, with a suitable adjustment to the minimum and maximum culling distances for the ray ($t_{min}$ and $t_{max}$). The ray-coordinate system has three basis vectors. A first of the basis vectors is aligned with the ray direction. The second and third basis vectors are transverse (or non-parallel relative) to the first basis vector. The second and third of the basis vectors may both be orthogonal to the first basis vector, and are not parallel with each other. The second and third basis vectors of the ray-coordinate system are not, in general, orthogonal to each other, although in some examples they may be orthogonal to each other. In examples described herein, the second and third basis vectors of the ray-coordinate system have a 0 as one component when expressed in the space-coordinate system. In some examples, the second and third of the basis vectors of the ray-coordinate system have a value of $\pm 1$ (i.e. a magnitude of 1) for one component when expressed in the space-coordinate system.

In examples described below, the ray-coordinate system is used by the intersection testing module 108 to perform intersection testing to determine whether a ray intersects a primitive, wherein the ray and the primitive are defined in a 3D space using a space-coordinate system. A result of performing the intersection testing for the ray is output from the intersection testing module 108 for use by the ray tracing system, e.g. for use in determining which shader program(s) is(are) executed for the ray by the processing logic 110.

The vertices defining the primitive may be translated for use in performing the intersection testing using the ray-coordinate system by subtracting the ray origin from the positions of the vertices defining the primitive in world space. Subtracting the ray origin from the positions of the vertices defining the primitive means that the position of the primitive is then defined relative to the origin of the ray. By shifting the vertices by the ray origin first, all relative error in downstream calculations is centred around the ray origin. In alternative examples, the vertices defining the primitive may be translated after ray-space projection by calculating the 2D coordinates of the ray origin in its own ray-space coordinate system upfront for each ray.

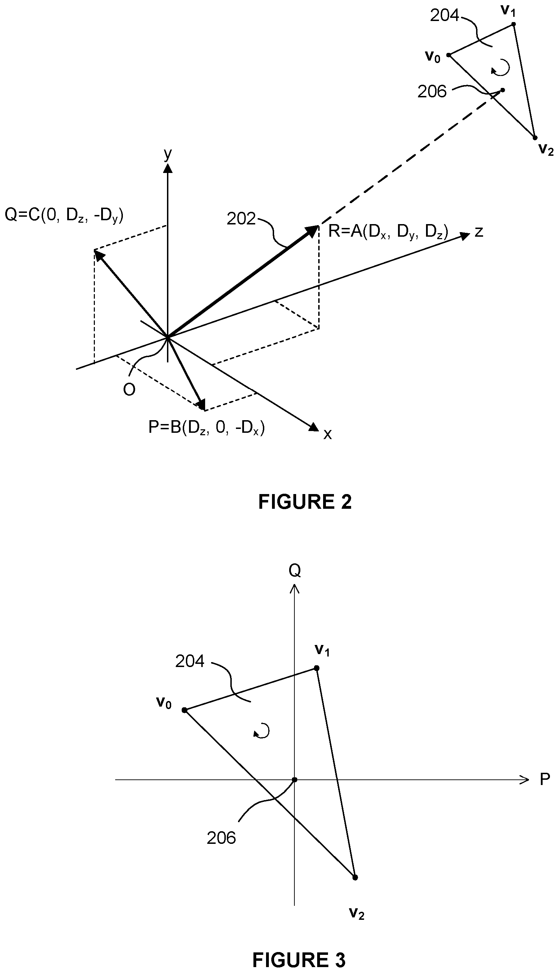

Figure 2 illustrates an exemplary ray 202 and an exemplary primitive 204 that are presented for intersection testing. In this example, the exemplary primitive is a convex polygon. More specifically, the exemplary primitive 204 is a triangle. The orientation of the primitive is indicated as clockwise, as viewed and from the ray's perspective. The primitive 204 is defined by the ordered set of vertices ($v_0$, $v_1$, $v_2$). Each vertex has a set of coordinate values in the space-coordinate system, where each coordinate value is a measurement of the vertex along a corresponding axis of the space-coordinate system. For the primitive 204, the first vertex $v_0$ may have a set of coordinates ($x_0,y_0,z_0$), the second vertex $v_1$ may have a set of coordinates ($x_1,y_1,z_1$) and the third vertex $v_2$ may have a set of coordinates ($x_2,y_2,z_2$). Each pair of vertices of the primitive 204 may define a corresponding edge of the primitive. The primitive 204 comprises three edges: a first edge defined by vertices ($v_0,v_1$), a second edge defined by vertices ($v_1,v_2$) and a third edge defined by vertices ($v_2,v_0$). As described above, the ray 202, $r(t)$, can be represented as $r(t) = O + Dt$, where $O$ is a vector representing the origin of the ray and $D$ is the direction vector of the ray, where $O = (O_x, O_y, O_z)$ and $D = (D_x, D_y, D_z)$. The x, y and z basis vectors of the space-coordinate system are shown in Figure 2. As described above, the space-coordinate system could be a world space coordinate system of a scene being rendered, or the space-coordinate system could be the instance space-coordinate system of an instanced set of geometry within a scene being rendered. The origin of the ray-coordinate system that is used in the intersection testing is the origin of the ray. The positions of the vertices defining the primitive 204 are translated by subtracting the ray origin from the positions of the vertices. In the example shown in Figure 2, the ray 202 intersects the primitive 204 at an intersection point 206. The basis vectors of the ray-coordinate system are represented as $P$, $Q$ and $R$, in Figure 2. The first basis vector, $R$, of the ray-coordinate system is set to be along the direction of the ray, $R = A(D_x, D_y, D_z)$, where A is a scalar value. The ray origin of the ray-coordinate system illustrated in Figure 2 is located at the intersection between the $P$, $Q$ and $R$ axes, at position $O$.

The second and third basis vectors, P and $Q$, may be defined to be $P = \left(1, 0, -\frac{D_x}{D_z}\right)$ and $Q = \left(0, 1, -\frac{D_y}{D_z}\right)$. More generally, and as shown in the example in Figure 2, $P = B(D_z, 0, -D_x)$ and $Q = C(0, D_z, -D_y)$, where B and C are any non-zero scalar values. In the example of Figure 2, P is orthogonal to P and to $Q$, which can be seen in that $P.R = Q.R = 0$. However, depending on the values of $D_x$ and $D_y$, P and Q are not necessarily orthogonal to each other. For example, unless $D_x$ or $D_y$ is zero then P and Q will not be orthogonal to each other. It is noted that $D_z$ cannot be zero because of the selective permutation of the axes such that $D_z$ is the major component of the ray direction and because a valid ray direction vector must have a non-zero magnitude to define a line (although it can be strictly negative).

Figure 3 illustrates the primitive 204 of Figure 2 that has been projected onto the pair of axes aligned with the basis vectors P and Q (i.e., the second and third basis vectors of the ray-coordinate system). Thus, the primitive of Figure 3 is observed from the point of view of the ray (i.e., positioning an "eye" at the ray's origin and "looking" along the ray direction vector). In the example illustrated in Figure 3, the P and Q axes are perpendicular, or orthogonal, to the direction of the ray 202. Note that in other examples the P and Q axes may be transverse (i.e., non-parallel) but not perpendicularly oriented relative to the ray direction. The P and Q axes, together with the R axis which is directed into the page, define the "ray space" of the ray 202. The ray origin $O$ from Figure 2 is shown at the origin 206 of the reference frame defined by axes P and *Q*, as the frame of reference is illustrated from the viewpoint of the ray, i.e., ray origin *O* and intersection point 206 of Figure 2 now coincide. The ray direction *P* is directed into the page, e.g., with the components of the ray direction vector along the *P* and *Q* axes as zero. Therefore, the intersection position 206 representing the intersection of the ray with the primitive 204 is at the origin in Figure 3. Figure 3 indicates that the orientation of the primitive 204 appears as clockwise in Figure 3, as determined by the winding order of its vertices. The winding order of a primitive is the order of the vertices that define that primitive, but ignoring any cyclical factor. In other words, only "odd" permutations of vertices are considered to represent a different winding order between one primitive and another. Thus, a first primitive may be determined to be distinct from a second primitive even if both primitives are defined by the same vertices, if the order of those vertices differs between the two primitives by an odd permutation (e.g., ordered back to front). In Figure 3, the ray-coordinate system basis vectors *P* and *Q* are shown at a right angle to each other even though they may not be orthogonal in the space coordinate system, where this implicit "shear" does not affect subsequent hit or intersection attribute calculations. Each vertex of the primitive 204 is defined by a set of coordinate values in the ray-coordinate system, where each coordinate value is a measurement of the vertex along a corresponding axis of the ray-coordinate system. For the primitive 204, the first vertex $v_0$ may have a first set of ray-space coordinates $(p_0, q_0, r_0)$, the second vertex $v_1$ may have a second set of coordinates $(p_1, q_1, r_1)$ and the third vertex $v_2$ may have a third set of coordinates $(p_2, q_2, r_2)$. In some examples, $r_i$ for each ray-space vertex may not be calculated when performing intersection testing for a primitive. That is, it may be possible to determine intersection distances without calculating the third ray-space coordinate of each vertex in that primitive. In an alternative example, $r_i$ could be used to store the major ray-space coordinate for each primitive vertex, as described in further detail below.

The ray-coordinate system may either be left-handed or right-handed. In Figure 3 the ray-coordinate system (with axes ordered as either PQR, RPQ, or QRP) is left-handed. In this coordinate system, the second Q axis is directed upwards, and the first P axis is directed from left to right. In a right-handed system one of the P or Q axes is reversed so that either the Q axis is directed downwards, or the P axis is directed from right to left (or alternatively the axes are reordered as either QPR, RQP, or PRQ). A left-handed coordinate system may be described as an anticlockwise system as the rotation from the first to second basis vector, as viewed in Figure 3, is in an anticlockwise direction. A right-handed system may be described as a clockwise system as the rotation from the first to second basis vector, as viewed in Figure 3, would be in a clockwise direction. The handedness of the system may affect the perceived primitive orientation (given a fixed primitive winding). For example, a right-handed coordinate system may reverse primitive orientation and a left-handed coordinate system may preserve primitive orientation, with respect to the point of view of the ray as shown in Figure 3. To indicate the handedness of the ray-coordinate system, a winding flag may be supplied to the user, to set when a space coordinate system of handedness opposite to expected is required. This winding flag indicates that any intersection orientation result should be reversed, one way to achieve this is to indicate that all edges should be treated as pointing in the opposite direction.

Projecting a primitive into ray space during intersection testing is advantageous as it reduces the testing to a 2D problem. The ray is determined to intersect the primitive only if the primitive covers the origin of the P and Q axes in ray space. After the primitive 204 has been projected into ray space, intersection testing for that primitive further comprises determining a parameter w that is indicative of which side of the eth edge of primitive 204 the ray passes on. For primitive 204, e is a number between 1 and 3. For example, w may be a signed parameter which is determined using a function (which is referred to herein as a "2D cross product"), $f(v_i, v_j)$ of the positions of the two projected vertices $v_i$ and $v_j$ defining the eth edge of the primitive. The 2D cross product, $f(v_i, v_j)$, of the positions of two projected vertices, $v_i$ and $v_j$, defining an edge, is defined as $f(v_i, v_j) = p_i q_j - q_i p_j$, where $p_i$ and $q_i$ are components of the projected vertex $v_i$ along the respective axes of the pair of axes, and where $p_j$ and $q_j$ are components of the projected vertex $v_j$ along the respective axes of the pair of axes. In other examples, other functions of the positions of the two projected vertices defining the edge may be used to determine the parameter w. The sign of *w* for the eth edge of the primitive 204 indicates whether the ray passes on the left or the right of that edge, from the edge's perspective (directed from $v_i$ to $v_j$). Passing on the "right" side of the edge corresponds to a clockwise rotation from the first endpoint to the second endpoint relative to the origin. With the form of the "2D cross product" given above as $f(v_i, v_j) = p_i q_j - q_i p_j$, and with a first axis pointing rightwards and a second axis pointing upwards, left/anticlockwise corresponds to a positive result of *f* and right/clockwise corresponds to a negative result of *f*. Assuming a left-handed system (as per Figure 2 and Figure 3), and aligning the first axis P and second axis Q with right and up respectively in projected space, we have the third axis R (the ray direction) directed into the page. This gives a perceived orientation with respect to Figure 3. In a right-handed system the third axis R points out of the page, giving the opposite perceived orientation to Figure 3.

Once the w parameter has been determined for all the edges of the primitive 204, then it can be determined whether the ray intersects the primitive based on the signs of the w parameters determined for the edges of the primitive. In an example, if the w parameters determined for the edges of the primitive all have the same sign then it is determined that the ray intersects the primitive, whereas if it is not the case that the w parameters determined for the edges of the primitive all have the same sign then it is determined that the ray does not intersect the primitive. That is, intersection testing comprises using the parameters determined for the edges of the primitive to determine whether the ray passes on the "inside" of the edges of the primitive when the (convex) primitive is considered as a whole, where it is determined that the ray intersects the primitive if it is determined that the ray passes on the inside of all the edges of the primitive. Similarly, it is determined that the ray does not intersect the primitive if it is determined that ray passes "outside" one or more of the edges of the primitive.

Performing intersection testing by determining 2D cross products for each edge of a primitive, as described above, involves floating-point arithmetic and may therefore be seen to be computationally expensive. For this reason, it is advantageous if the number of cross product calculations that have to be performed by an intersection testing module can be minimised. The calculations can be minimised by culling, or removing, primitives from intersection processing before these advanced calculations are performed. The culling of a primitive from intersection testing processing can be performed if it can be determined, without performing floating-point arithmetic, that the primitive is not intersected by the ray. Culling primitives in this way may be achieved via the processing methods described below. The methods described below may otherwise be referred to as "pre-processing methods", as they precede substantive intersection testing (i.e., 2D cross product calculations). The processing methods may be used to render an image in a scene, as they are used to inform the subsequent intersection testing that is required to render the scene.

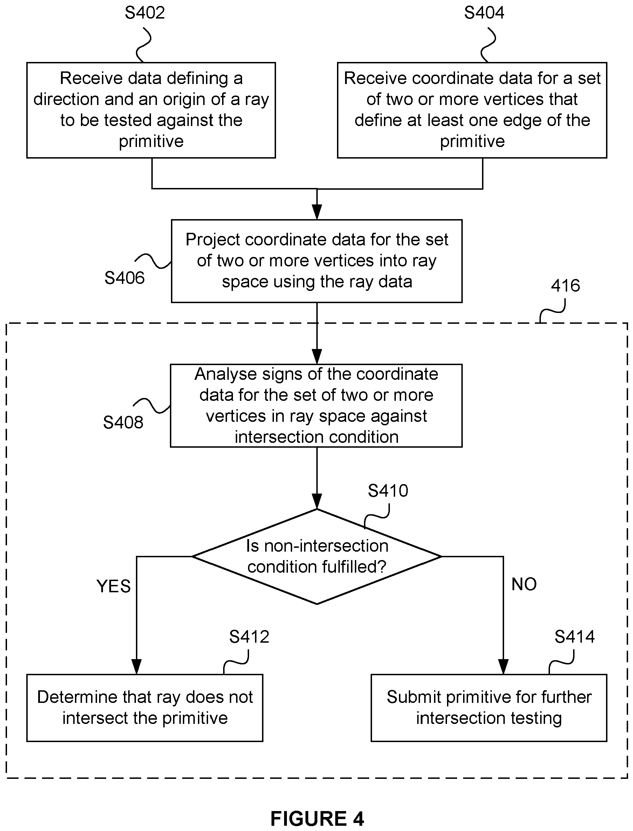

A first method of processing a primitive as part of intersection testing in a ray tracing system is illustrated in Figure 4. The method of Figure 4 is performed for one primitive in a scene to be rendered. The method may be performed for one ray that is to be tested against that primitive, or for a bundle of rays that are to be tested against the primitive. In the description below, the term "ray" is used to refer to both a single ray and a bundle of rays. The method of Figure 4 is performed before any floating-point calculations are conducted for the intersection testing of the ray in respect of the primitive. If the outcome of the method is a determination that the ray does not intersect the primitive, then no further intersection testing is performed for the primitive against that ray. In other words, the substantive floating-point calculations are not performed for the primitive. The method may be performed by an intersection testing module, such as the module 108 illustrated in Figure 1.

The method of Figure 4 commences at step S402, which comprises receiving data defining a direction and an origin of a ray to be tested against the primitive. In other words, at step S402 data defining the ray to be tested against a primitive is received. The ray data may be received by the intersection testing module 108 of Figure 1. The ray data may define a primary ray or a secondary ray. Ray data may be fetched by the intersection testing module 108 from a memory that is accessible by the intersection testing module. The origin of the ray is the point from which the ray is deemed to originate (e.g., the viewpoint, or camera, of the scene). The direction of the ray indicates the bearing of the ray through the scene to be rendered. As described above, the origin and direction of the ray together define the ray. The direction and origin of the ray are used to project the vertices of a primitive into a ray-coordinate system for that ray.

The method of Figure 4 further comprises, at step S404, receiving coordinate data for a primitive. More specifically, step S404 comprises receiving coordinate data for a set of two or more vertices that define the primitive. The set of two or more vertices defines at least one edge of the primitive. As mentioned above, each primitive in a scene to be rendered is defined by an ordered set of vertices, and each edge of the primitive is defined by two of those ordered vertices. The coordinate data may indicate the coordinates of each vertex in the set of vertices. The coordinate data may comprise one or more vertex coordinate for each vertex in the set of vertices. A vertex coordinate is an indication of the position of that vertex along an axis. The vertex coordinates may define the position of each vertex of the set of vertices in the space-coordinate system. That is, the vertex coordinates may define the coordinate system in which the primitive is defined. The space-coordinate system may be a world space-coordinate system or an instance space-coordinate system. The coordinate data may be received at the same time as the ray data. The coordinate data may be received sequentially after, or before, the ray data. The coordinate data may be received from a pipeline of primitive data, where the primitives are to be processed sequentially by the ray. The coordinate data may be received from a different location to the ray data.

Once the ray data and the coordinate data have been received by the intersection testing module, then at step S406 the method comprises projecting the coordinate data for the set of two or more vertices into ray space using the ray data. That is, the coordinate data is projected into the ray-coordinate system from the space-coordinate system. As described above, the coordinate data is projected into ray space by defining the basis vectors $P$, $Q$ and $R$, where $R$ is set to be along the direction of the ray, $R = A(D_x, D_y, D_z)$, where $A$ is a scalar value. The second and third basis vectors, $P$ and $Q$, are defined as $P = B(D_z, 0, -D_x)$ and $Q = C(0, D_z, -D_y)$. values. The P and Q axes of ray space are defined as two non-parallel axes that are both transverse to the direction R of the ray. The origin of the ray space on of the ray. The projection of vertex coordinates into ray-space may be performed as an initial step of intersection testing that precedes substantive (i.e., floating-point) intersection testing.

After the coordinate data for the primitive has been projected into ray space, then at step S408 the signs of the coordinate data for the set of two or more vertices in ray space are analysed to determine whether a non-intersection condition is fulfilled. That is, the signs of the coordinate data for the set of two or more vertices are compared to a non-intersection condition. The signs of the coordinate data indicate the orientation of the vertex coordinates along one or more axes of ray space when compared to the origin of ray space. That is, a sign of vertex coordinate data indicates, relative to a respective ray-space axis, whether the position of the vertex is positive or negative. The "non-intersection condition" may otherwise be referred to as a test, or a determination of whether a certain scenario is true. The non-intersection condition determines whether the signs of the coordinate data fulfil a predetermined criterion. The non-intersection condition may require that the signs of the vertex coordinates are compared to each other. Alternatively, the non-intersection condition may require that the signs of the vertex coordinates are compared to another value. Examples of non-intersection conditions that may be fulfilled at step S408 are provided below. In some examples, the non-intersection condition requires that the orientation of one or more edges of a primitive, each edge being defined by a respective pair of vertices, is the same as a corresponding predetermined orientation. In other examples, the non-intersection condition requires that the signs of certain vertex coordinates for the primitive are the same as each other.

If the non-intersection condition is fulfilled (i.e., the answer to the test at step S410 is yes), the method proceeds to step S412 at which it is determined that the ray does not intersect the primitive. In other words, for the method of Figure 4, fulfilment of the non-intersection condition indicates that the ray does not intersect the primitive. Thus, if the signs of the vertex coordinates pass the test at step S410, then this implies that there is a "miss" between the ray and the primitive. The intersection testing module may be configured, in response to determining that the vertex coordinates fulfil the non-intersection condition, to determine that the ray does not intersect the primitive. The possible outcomes of this determination are explained below.

Alternatively to step S412, if the non-intersection condition is not fulfilled (i.e., the answer to the test in step S410 is no) then it is not determined that the ray does not intersect the primitive. That is, the intersection testing module may be configured to determine that, if the non-intersection condition is not fulfilled, further testing is required to determine whether there is an intersection between the ray and the primitive. Thus, the method proceeds to step S414 at which the primitive is submitted for further intersection testing. The further intersection testing may comprise performing floating-point arithmetic (e.g., 2D dot cross product calculations) to determine whether there is an intersection between the ray and the primitive.

Analysing the signs of the coordinate data may comprise comparing the sign of a first coordinate of a first vertex of a primitive, in ray space, to the sign of a first coordinate of one or more other vertices of the primitive, in ray space. For example, where each vertex of the primitive has a p and a q coordinate, in ray space, the method of Figure 4 may comprise comparing the sign of the p coordinate of a first vertex for the primitive to the p coordinate of one or more other vertices for the primitive. Analysing the signs of the coordinate data may comprise comparing the sign of two or more coordinates of a first vertex of a primitive to two or more corresponding coordinates of one or more other vertices for the primitive. As mentioned above, the two or more vertices in the set of two or more vertices define at least one edge of the primitive. Analysing the signs of the coordinate data for the set of two or more vertices in ray space may indicate whether the edge has crossed an axis of the two non-parallel axes in ray space. More specifically, if the sign of a first coordinate for a first edge-defining vertex is different from the sign of the first coordinate for a second edge-defining vertex, then it can be defined that the edge crosses at least one axis. For example, if an edge is defined by vertices $v_0, v_1$ and the p coordinate of $v_0$ has a different sign to the p coordinate of $v_1$, then this implies that the edge $v_0, v_1$ must cross the Q axis. Similarly, if the q coordinate of $v_0$ has a different sign to the q coordinate of $v_1$, then this implies that the edge $v_0, v_1$ must cross the P axis. This is described in further detail below.

The method of Figure 4 may further comprise performing a zero comparison on the coordinate data for each vertex of the set of two or more vertices. That is, method step S408 involves assigning a sign to each coordinate value of the set of vertices, in ray space, by performing a zero comparison. A zero comparison is a comparison that compares a value to zero, to determine whether that value is greater than or less than zero. Within the context of coordinate data, a zero comparison determines the location of a vertex coordinate relative to the origin of the coordinate system, or compares this location to the origin. A vertex coordinate is "strictly positive" if it is greater than (and not equal to) zero. A vertex coordinate is defined as "strictly negative" if it is less than (and not equal to) zero. Once it has been determined whether the coordinate is greater than or less than zero, a sign can be appointed to that coordinate (e.g., a + sign for a strictly positive value, and a - sign for a strictly negative value). Alternatively, a flag can be appointed to the coordinate to determine whether it is greater than or less than zero (e.g., a data bit value of 0 for a strictly positive value and a data bit value of 1 for a strictly negative value). This flag may be a data bit, referred to as a "sign bit". Zero comparisons are used for the methods described herein as these types of comparisons are cheap and efficient, using minimal hardware space and processing power. In alternative examples, the method of Figure 4 may comprise performing an epsilon comparison on the coordinate data for each vertex of the set of two or more vertices. In some examples it may not be possible to ensure precision or accuracy of vertex values that are close to zero. Thus, to ensure conservative intersection results, it may be necessary to "pad" the coordinate comparisons slightly by checking that a coordinate is $< -\varepsilon$ or $> \varepsilon$, rather than $< 0$ or $> 0$, for a (small) strictly positive error value $\varepsilon$. These comparisons may instead be made with non-strict inequalities. The size of the error value may be absolute or relative. For example, the error value may be relative to the magnitudes of the vertex coordinates after translation by the ray origin but before projection into ray space. Note that an "epsilon comparison" may be slightly more expensive than a "zero comparison", as comparison to zero is usually the simplest comparison operation to perform in floating-point arithmetic.

The signs of the coordinate data for the set of two or more vertices in ray space may be used to indicate the orientation of the edge. An edge may have either an anticlockwise or a clockwise orientation. An edge has a clockwise orientation, from the viewpoint of a ray, when that ray (i.e., the origin of ray space) passes on the right-hand side of the edge, with respect to the direction of that edge. An edge has an anticlockwise orientation, from the viewpoint of the ray, when that ray (i.e., the origin of ray space) passes on the left-hand side of the edge, with respect to the direction of that edge. The signs of vertex coordinate data for a primitive may be used to determine the orientation of an edge of a primitive when the vertices that are observed are a pair of vertices that define an edge. This is explained in further detail below.

The signs of the coordinate data for the set of two or more vertices in ray space may be used to determine the winding order of the primitive. The winding order of the primitive is determined using the order of the vertices within the primitive (which, for the edges, implies their direction). Thus, the winding order of the primitive affects the orientation of the edges of the primitive in ray space (i.e., from the point of view of the ray). Alongside this ordering, the orientation of the edges of the primitive depends on the vertex coordinates for the primitive in ray space. For example, if the signs of a pair of vertex coordinates that define an edge of a primitive indicate that that edge has an anticlockwise orientation, then it may be derived from that that the primitive as a whole will have an anticlockwise orientation if a hit occurs. Similarly, if a pair of vertex coordinates that define an edge of a primitive indicate that that edge has a clockwise orientation, then it may be derived from that that the primitive as a whole will have a clockwise orientation if a hit occurs. Determining the orientation of a primitive may be useful in determining what type of (if any) further processing is to be performed on that primitive, as is described in further detail below.

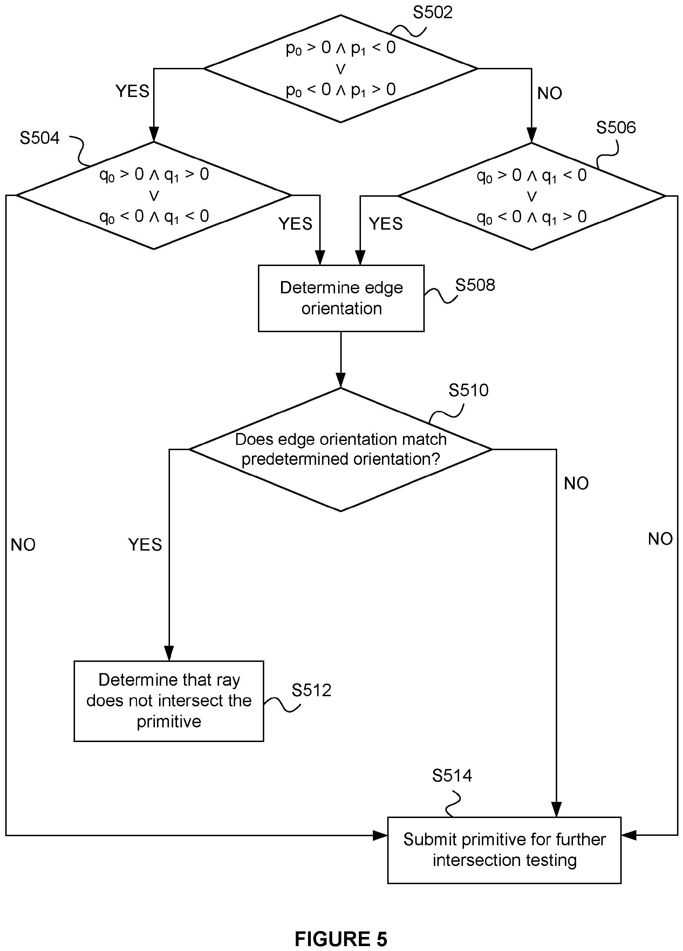

Steps S408-S414 make up the analytic steps of the method illustrated in Figure 4, as annotated by reference 416. As mentioned above, there may be multiple methods of analysing the signs of the coordinate data a set of two or more vertices as described in S408, and there may be different types of non-intersection conditions as introduced in step S410. Some more detailed examples of the analytic steps that may be performed in steps S408-S414 are illustrated in Figures 5, 6 and 9.

A first example of analytic steps 416 is illustrated in Figure 5. The analysis method illustrated in Figure 5 comprises analysing the vertex coordinates of a first pair of vertices for a primitive. The first pair of vertices may define the edge of a first primitive. Thus, the method of Figure 5 only requires coordinate data for a pair of vertices that define an edge of a primitive to be tested. When the method of Figure 5 is used, step S404 may comprise receiving coordinate data for only two vertices that define an edge of the primitive. Alternatively, step S404 may comprise receiving coordinate data for a plurality of vertices that define the primitive, and the method of Figure 5 may be performed sequentially for each of the edges of the primitive that are defined by those vertices. By analysing the signs of the vertex coordinates, in ray space, of a pair of vertices that define an edge, it can be determined whether that edge crosses one or more of the axes defining the PQ plane. Then, this determination may be used to determine the orientation of the edge within the ray-coordinate system. Once the orientation of the edge has been determined then it may be determined, based on a culling scheme, whether the edge is guaranteed not to intersect the primitive.

The exemplary method illustrated in Figure 5 considers a pair of vertices $v_0, v_1$ that define an edge of a primitive. Each of the vertices $v_0, v_1$, is defined by a set of coordinate values in the space-coordinate system and, when projected into ray space, is also defined by a set of coordinate values in the ray-coordinate system. Each ray-space coordinate value is a measurement of the vertex along a corresponding axis of the ray-coordinate system. The first vertex $v_0$ may be defined by a first set of ray-space coordinates $(p_0, q_0, r_0)$ and the second vertex $v_1$ may be defined by a second set of coordinates $(p_1, q_1, r_1)$. As explained above, $r_0$ and $r_1$, as projections onto the third ray-space basis vector, may not be calculated in this method, as these coordinates may not be required for the determination of intersection distances. The method of Figure 5 may comprise analysing the coordinates of $v_0$ and $v_1$ along the P and Q axes, which are the two non-parallel axes that may be both transverse to the direction of the ray.

More specifically, the method of Figure 5 may comprise determining whether a first coordinate of each vertex of the pair of vertices $v_0, v_1$ has a different sign, and whether a second coordinate of each vertex of the pair of vertices has the same sign. The sign of a vertex coordinate can be positive if it is strictly greater than zero. The sign of a vertex coordinate can alternatively be negative if it is strictly less than zero. If the sign of a first coordinate of the first vertex is different from the sign of that first coordinate of the second vertex, then it can be derived that the edge that is defined by those vertices crosses one of the P and Q axes of ray space. For example, if $p_0$ is different from $p_1$ (e.g., if $p_0$ is positive and $p_1$ is negative) it can be derived that the edge $v_0, v_1$ crosses the Q axis at a point along its length. If $q_0$ is different from $q_1$ (e.g., $q_0$ is positive and $q_1$ is negative) then it can be derived that that the edge $v_0, v_1$ crosses the P axis at a point along its length. If the edge crosses one of the P and Q axes (i.e., only one of these axes), then the orientation of the edge may be derived from the direction in which the ray extends from $v_0$ to $v_1$.

The method of Figure 5 comprises, at step S502, determining whether the sign of a first coordinate for a first vertex of the first pair of vertices, in ray space, is different from the sign of a first coordinate for a second vertex of the first pair of vertices. That is, at step S502 it is determined whether the first and second vertices, $v_0$ and $v_1$, do not share the same sign in one of their coordinates. Specifically, step S502 comprises determining whether the sign of a first coordinate of $v_0$ ($p_0$) is different to the sign of the corresponding first coordinate of $v_1$ ($p_1$). The signs of $p_0$ and $p_1$ are different if the sign of $p_0$ is positive and the sign of $p_1$ is negative or if the sign of $p_0$ is negative and the sign of $p_1$ is positive. In mathematical terms, the condition under which $p_0$ and $p_1$ are determined to be different may be defined as follows:

$$(p_o > 0 \wedge p_1 < 0) \vee (p_0 < 0 \wedge p_1 > 0)$$

Whilst in Figure 5 step S502 comprises comparing p coordinates, in an alternative example this step may comprise comparing a different coordinate of $v_0$ and $v_1$, such as the q coordinate.

If it is determined that the sign of the first coordinate for a first vertex of the first pair of vertices, in ray space, is different from the sign of a first coordinate for a second vertex of the first pair of vertices (i.e., if the answer to the test at step S502 is yes), then the method proceeds to step S504 in which is determined whether the sign of a second coordinate for a first vertex of the first pair of vertices, in ray space, is the same as the sign of the second coordinate for a second vertex of the first pair of vertices. That is, at step S504 it is determined whether $v_0$ and $v_1$ share the same sign in a second of their coordinates. Specifically, step S504 comprises determining whether the sign of a second coordinate of $v_0$ ($q_0$) is the same as the sign of the corresponding second coordinate of $v_1$ ($q_1$). The signs of $q_0$ and $q_1$ are the same if the signs both of $q_o$ and $q_1$ are positive, or if the signs both of $q_o$ and $q_1$ are positive. In mathematical terms, the condition under which $q_0$ and $q_1$ are determined to be the same may be defined as follows:

$$(q_o > 0 \wedge q_1 > 0) \vee (q_o < 0 \wedge q_1 < 0)$$

Whilst in Figure 5 step S504 comprises comparing q coordinates, in an alternative example this step may comprise comparing a different coordinate of $v_0$ and $v_1$, such as the p coordinate.

If it is determined that the sign of the first coordinate for a first vertex of the first pair of vertices, in ray space, is the same as the sign of the first coordinate for a second vertex of the first pair of vertices (i.e., if the answer to the test at step S502 is no), then the method proceeds to step S506 in which is determined whether the sign of the second coordinate for a first vertex of the first pair of vertices, in ray space, is different from the sign of the second coordinate for a second vertex of the first pair of vertices. That is, at step S506 it is determined whether $v_0$ and $v_1$ have a different sign in a second of their coordinates. Specifically, step S506 comprises determining whether the sign of a second coordinate of $v_0$ ($q_0$) is different from the sign of the corresponding second coordinate of $v_1$ ($q_1$). The signs of $q_0$ and $q_1$ are different if the sign of $q_o$ is positive and the sign of $q_1$ is negative, or if the sign of $q_0$ is negative and the sign of $q_1$ is positive. In mathematical terms, the condition under which $q_0$ and $q_1$ are determined to be different may be defined as follows:

$$(q_o > 0 \wedge q_1 < 0) \vee (q_o < 0 \wedge q_1 > 0)$$

Whilst in Figure 5 step S506 comprises comparing q coordinates, in an alternative example this step may comprise comparing a different coordinate of $v_0$ and $v_1$, such as the p coordinate.

Thus, for the method illustrated in Figure 5, analysing the signs of the coordinate data for the set of two vertices in ray space comprises determining whether (i) the sign of a first coordinate for a first vertex of the first pair of vertices, in ray space, is different from the sign of a first coordinate for a second vertex of the first pair of vertices and that the sign of a second coordinate for a first vertex of the first pair of vertices, in ray space, is the same as the sign of a second coordinate for a second vertex of the first pair of vertices (i.e., the answer to the test at step S502 is yes and the answer to the test at step S504 is also yes), or (ii) the sign of the second coordinate for the first vertex of the first pair of vertices, in ray space, is different from the sign of the second coordinate for a second vertex of the first pair of vertices and that the sign of the coordinate for the first vertex of the first pair of vertices, in ray space, is the same as the sign of the first coordinate for the second vertex of the first pair of vertices (i.e., the answer to the test at step S506 is yes and the answer to the test at step S502 is no). If either condition (i) or condition (ii) is fulfilled, then it can be derived that the edge defined by the first and second vertices crosses one of the P and Q axes, in ray space. If either of conditions (i) or (ii) are fulfilled, the method can proceed to step S508 at which the orientation of the edge that is defined by the pair of vertices is determined.

It is worth noting that, whilst steps S502 to S506 in Figure 5 are illustrated in a particular order, these steps can be performed in any order. The steps may be performed sequentially. Alternatively, the steps may be performed in parallel. The tests at steps S502 to S506 may be reversed (e.g., the test at step S502 may comprise determining whether the signs of $p_0$ and $p_1$ are the same).

At step S508, the analysis of the signs of the coordinate data for first pair of vertices in ray space is used to determine the orientation of the first edge of the primitive. The orientation of a primitive edge can be determined by observing the signs of the vertices that define that edge. For an edge that is defined by vertices $v_0, v_1$, the edge starts at $v_0$ and ends at $v_1$. Based on the signs of the coordinates that define each of these edges, the orientation of an edge can be determined based on whether it passes from the -p to +p space, from the +p to -p space, from -q to +q space and from +q to -q space. For example, for a left-handed coordinate system (i.e., first and second axes P and Q as shown in Figure 3, and the third ray-aligned axis directed into the page), an edge that has a first vertex $v_0$ with a negative p coordinate and a second vertex $v_1$ with a positive p coordinate, both vertices having negative q coordinates, may be determined to have an anticlockwise orientation because the ray passes on the left-hand side of the edge. Similarly, if both vertices had positive q coordinates, then the edge may be determined to have a clockwise orientation because the ray passes on the right-hand side of the edge. A full list of edge orientations that may be derived from the signs of the p and q coordinates of a pair of vertices that define an edge is provided below. Note that an X denotes a combination of coordinate signs where the orientation of the edge cannot be derived from the signs of the p and q coordinates alone.

| $p_0$ | $p_1$ | $q_0$ | $q_1$ | Orientation (left-handed coordinate system) | Orientation (right-handed coordinate system) |
|---|---|---|---|---|---|
| <0 | <0 | <0 | <0 | X | X |
| <0 | <0 | <0 | >0 | Clockwise | Anticlockwise |
| <0 | <0 | >0 | <0 | Anticlockwise | Clockwise |
| <0 | <0 | >0 | >0 | X | X |
| <0 | >0 | <0 | <0 | Anticlockwise | Clockwise |
| <0 | >0 | <0 | >0 | X | X |
| <0 | >0 | >0 | <0 | X | X |
| <0 | >0 | >0 | >0 | Clockwise | Anticlockwise |
| >0 | <0 | <0 | <0 | Clockwise | Anticlockwise |
| >0 | <0 | <0 | >0 | X | X |
| >0 | <0 | >0 | <0 | X | X |
| >0 | <0 | >0 | >0 | Anticlockwise | Clockwise |
| >0 | >0 | <0 | <0 | X | X |
| >0 | >0 | <0 | >0 | Anticlockwise | Clockwise |
| >0 | >0 | >0 | <0 | Clockwise | Anticlockwise |
| >0 | >0 | >0 | >0 | X | X |

The results that are summarised above may be stored in a look-up table that is accessible to the intersection testing module for use in determining edge orientation at step S508 of Figure 5.

In some instances, the ray-space coordinate of a primitive vertex may be equal to zero. In this scenario, as an edge having an endpoint coordinate as zero does not cross its respective coordinate axis. To account for scenarios in which primitive ray-space vertices are equal to zero, a trichotomy is defined where a different bit value is assigned to each of s > 0, s < 0 and s = 0 (here s represents either the p or the q coordinate of a ray-space vertex). More specifically:

A floating-point value "= 0" may be represented as 0 = 0b000
A floating-point value "> 0" may be represented as 1 = 0b001
A floating-point value "< 0" may be represented as 7 = 0b111

With the three-bit values given above an unsigned arithmetic calculation, modulo 8, may be performed as follows:

$$f = p_o q_1 - q_o p_1$$

The result of this calculation will be one of 0, 1, 2, 6 and 7. An edge may then be defined as anticlockwise (for a left-handed system) if the result $f$ = 1, 2 and as clockwise (for a left-handed system) if $f$ = 6, 7. It may not be possible to determine the orientation of the edge if $f$ = 0. Alternatively, a look-up table may be used to encode the functionality of this expression on a case-by-case basis. For example, an abbreviated list of edge orientations that may be derived from the signs of the p and q coordinates of a pair of vertices that define an edge, according to this technique, is provided below:

| $p_0$ | $p_1$ | $q_0$ | $q_1$ | Orientation (left-handed coordinate system) | Orientation (right-handed coordinate system) |
|---|---|---|---|---|---|
| <0 | <0 | <0 | <0 | X | X |
| <0 | <0 | <0 | =0 | Clockwise | Anticlockwise |
| <0 | <0 | <0 | >0 | Clockwise | Anticlockwise |
| <0 | <0 | =0 | <0 | Anticlockwise | Clockwise |

(continued)

| $p_0$ | $p_1$ | $q_0$ | $q_1$ | Orientation (left-handed coordinate system) | Orientation (right-handed coordinate system) |
|---|---|---|---|---|---|
| <0 | <0 | =0 | >0 | X | X |

In some examples, the ray-coordinate system may only be observed in a left-handed coordinate system. In these examples, the intersection testing module does not need to have an indication of the handedness of the system to determine edge orientation. In other examples, the coordinate system may be observed in either a left-handed or a right-handed coordinate system. It has been explained above that, in a right-handed system, one of the P or Q axes is reversed so that either the Q axis is directed downwards or the P axis is directed from right to left (or, alternatively, the order of the first P axis and second Q axis is reversed). In other words, the handedness of the ray-coordinate system switches the orientation of the two non-parallel axes that may be orthogonal to the ray direction in ray space. Thus, in a right-handed system, the orientation of an edge from the viewpoint of a ray appears reversed. This reversal is indicated in the table above.

To take the handedness of the ray-coordinate system into account when determining the orientation of the edge of a primitive, a handedness flag indicating the handedness of the ray-coordinate system may be provided to the intersection testing module. In some examples, the flag may be a single bit in length. A bit value of zero may indicate that the orientation of the ray space is clockwise, and therefore that no edge reversal is required. If the flag has a value of one, the orientation of ray space may be reversed (i.e., it may be anticlockwise). The flag may be added to the primitive data such that it is supplied to the intersection testing module as part of that data and therefore can be modified per primitive/geometry/instance. The flag may alternatively be supplied to the intersection testing module, or may be available to that unit, independently of the primitive data: the flag may be added to the ray data such that it is supplied to the intersection testing module as part of that data and therefore can be modified per ray; the flag may be embedded or hardcoded into the system itself, either explicitly (e.g., such that it can be modified by a device context etc.), or implicitly (e.g., by pre-selecting the column in the look-up table above). In any case, the combination of the flag and the signs of the coordinate data for the ray-space primitive vertices is used, in combination with the table above, to determine the edge orientation. Once the edge orientation has been determined, the method proceeds to step S510.

At step S510 it is determined whether the orientation of the edge matches a predetermined edge orientation. Thus, the non-intersection condition of step S410 may be, according to the method of Figure 5, that the orientation of the edge matches a predetermined edge orientation. The predetermined edge orientation may be chosen to match a predetermined primitive orientation associated with a primitive culling rule. The primitive culling rule may cull, or remove from intersection testing, primitives that are determined to have a particular orientation, from the viewpoint of the ray. An example of a primitive culling rule is back-face primitive culling. Back-face primitive culling culls "back-facing" primitives, which are primitives that are determined to have an outside surface that faces away from the ray origin (where "outside", "front-facing" and the opposite of the predetermined primitive orientation are considered identically). In contrast, "front-facing" primitives are primitives that are determined to have an outside surface that faces towards the ray origin (where "outside", "front-facing", and the predetermined primitive orientation are considered identically). It may be useful, for some ray tracing operations, to cull back-facing primitives as these primitives are usually intended to be hidden in the rendered scene and so processing the primitives is redundant.

A back-face culling method determines primitives with a predetermined particular orientation to be "back-facing". The orientation of a primitive can be derived from the orientation of a single edge of the primitive because, for primitives that are intersected by a ray, all the edges of that primitive share the same orientation with respect to the ray. Thus, if the edge defined by vertices $v_i$, $v_j$ is determined to have a first orientation, then it can be derived that either (i) the primitive as a whole has the first orientation, or (ii) one or more edges of the primitive has an opposing orientation and so the primitive is not intersected by the ray. If scenario (ii) is true, then it is desirable to cull the primitive as it can be derived that the ray will miss the primitive. If scenario (i) is true then a culling rule can be used to cull primitives with the first orientation. In one example, the culling method may determine that primitives with an anticlockwise orientation, in a left-handed ray-coordinate system, are back-facing. The method may then cull, or prevent further intersection testing of, primitives that are determined to have an anticlockwise orientation. In other words, if the orientation of the first edge of the primitive matches the predetermined (e.g., anticlockwise) primitive orientation, then it can be determined that there is not an intersection between the ray and the primitive. This is because the predetermined (e.g., anticlockwise) orientation indicates that the ray does not intersect a primitive comprising an edge that has that orientation.

Thus, if the orientation of an edge is determined to match the predetermined orientation (e.g., anticlockwise), then the method proceeds to step S512 at which it is determined that the ray does not intersect the primitive(s) containing that edge. That is, if it is determined that the orientation of the edge matches the predetermined orientation of the culling rule, then any primitives containing that edge are culled. The predetermined orientation may comprise one or more predetermined orientations. That is the predetermined orientation may be a single orientation (e.g., clockwise or anticlockwise), or two orientations (e.g., both clockwise and anticlockwise). The indication of the predetermined orientation may be supplied to the intersection testing module as a flag. The flag may be a single bit. In this example, the single bit of the flag may be used to indicate one of two possible states. For example, a first bit value may indicate that primitives with a clockwise orientation should be culled, and a second bit value may indicate that primitives with an anticlockwise orientation should be culled. The flag may alternatively comprise two bits. In this example, the two bits of the flag may be used to indicate one of four possible states. For example, a first bit value may indicate that primitives with a clockwise orientation should be culled, a second bit value may indicate that primitives with an anticlockwise orientation should be culled, a third bit value may indicate that no primitives should be culled (i.e., neither clockwise nor anticlockwise) and a fourth bit value may indicate that all primitives should be culled (i.e., both clockwise and anticlockwise). This flag may be provided with primitive data, ray data, or embedded in the testing system, such that it can be modified per primitive/geometry/primitive/ray etc., in the same way as the handedness flag.

If the answer to the test at step S510 is no (i.e., the edge orientation doesn't match the predetermined edge orientation) then the method proceeds to step S514 at which the primitive is submitted for further intersection testing. That is, it is determined as a result of step S510 that the primitive is not one that can be culled early, based on the analysis of the particular edge being considered, and so subsequent intersection testing can be performed to determine whether there is an intersection between the primitive and the ray. In Figure 5, the further intersection testing may comprise analysing the vertex coordinates of one or more different pairs of vertices that define the primitive, to determine whether that one or more different pairs of vertices defines an edge that crosses either (but not both) the P or Q axis. That is, the method of Figure 5 may be performed for at least one other pair of primitive vertices. If all the pairs of primitive vertices have been tested by the method of Figure 5 and step S512 has not been reached, then the subsequent intersection testing at step S514 may be the substantive intersection testing (e.g., floating-point calculations) that are defined above.

If the answer to the test at either of steps S506 or S504 is no, then the method may also proceed to step S514 at which the primitive containing the edge is submitted for further intersection testing. By the end of steps S504 and S506 the method has derived from the signs of $p_0$, $p_1$, $q_o$ and $q_1$ whether the edge defined by vertices $v_0$, $v_1$ crosses one or more of the P and Q axes. If $p_0$ and $p_1$ have the same sign, then the edge does not cross the Q axis. If $q_o$ and $q_1$ have the same sign, then the edge does not cross the P axis. Thus, if the vertices $v_0$, $v_1$ share the same sign in both their p and q coordinates (i.e., if the answer to the test at S506 is no), then it can be derived that the edge crosses neither the P nor the Q axis. In this scenario, it may not be possible to determine the orientation of the edge from the signs of the p and q coordinates alone, and so further intersection testing must be performed at step S514. If $p_0$ and $p_1$ have different signs, then the edge does cross the Q axis. If $q_o$ and $q_1$ have different signs, then the edge does cross the P axis. Thus, if the vertices $v_0$, $v_1$ have different signs in both their p and q coordinates (i.e., if the answer to the test at S504 is no), then it can be derived that the edge crosses both the P and the Q axis. In this scenario, it may also not be possible to determine the orientation of the edge from the signs of the p and q coordinates alone. This is because, if an edge crosses both the ray-space exes, the endpoints of those edges are located in opposite quadrants of 2D ray space. In this situation, an edge can be continuously moved so that it crosses over the origin, but without its endpoints leaving their respective quadrants. This means that either a clockwise or an anticlockwise edge orientation can be derived from the same combination of signs. So, further intersection testing must again be performed at step S514 to determine the definitive orientation of the edge.

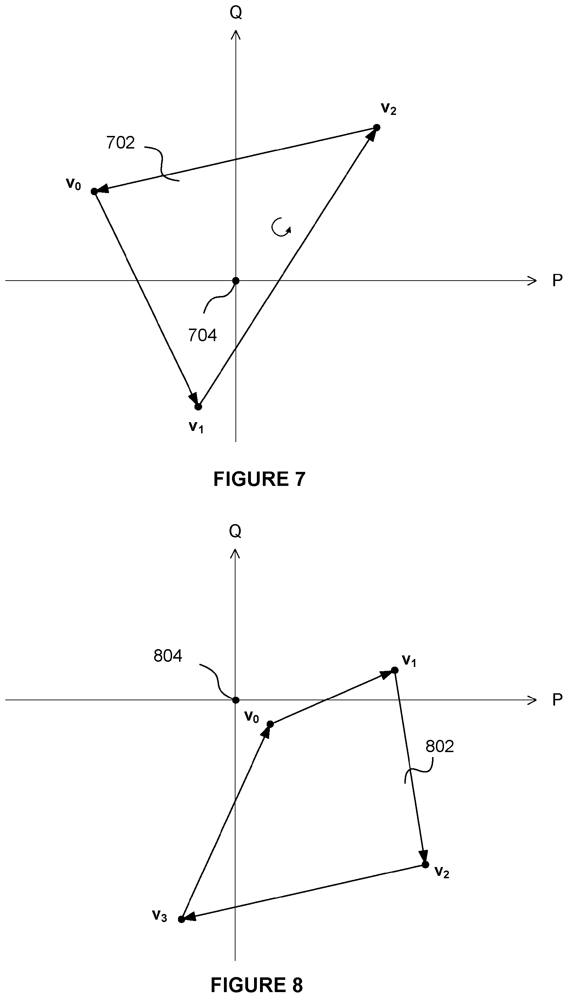

An example of a primitive that can be culled using the method illustrated in Figure 5 is illustrated in Figure 7. The primitive 702 in Figure 7 has three ordered vertices $v_0$, $v_1$, $v_2$, with each pairing of these vertices defining a respective edge of the primitive. The primitive 702 is illustrated in Figure 7 as being projected into the ray-coordinate system. In this coordinate system, assuming that the system has a clockwise orientation, the primitive can be seen to have an anticlockwise orientation with respect to the viewpoint of the ray. That is, the ray passes the primitive on the left-hand side of each of the edges of the primitive, with respect to the edge directions. This primitive can be culled using a back-faced culling rule using the method of Figure 5 described above, assuming that the predetermined primitive orientation is associated with anticlockwise back-face primitives. Looking at the vertices that define the first edge of the primitive, $v_0$, $v_1$, it can be determined that the signs of those vertices, in ray space, are $-p_0$, $+q_0$, $-p_1$, $-q_1$, for strictly positive measurements $p_i$, $q_i$. In other words, the signs of the first coordinates for the pair of vertices are the same and the signs of the second coordinates for the pair of vertices are different. Thus, the edge defined by vertices $v_0$, $v_1$ can be determined to cross the P axis, but not the Q axis. This means that the orientation of the edge can be defined. For a primitive that is intersected by a ray, each of the edges of the primitive will have the same orientation in the ray-coordinate system. Thus, as the edge defined by vertices $v_0$, $v_1$ is determined to have an anticlockwise orientation (as $p_i$ is negative and $q_i$ changes from positive to negative), then it can be derived that either (i) the primitive as a whole has an anticlockwise orientation, or (ii) one or more edges of the primitive has a clockwise orientation and so the primitive is not intersected by the ray. If scenario (ii) is true, then it is desirable to cull the primitive as it can be derived that the ray will miss the primitive. Alternatively, if scenario (i) is true and the culling rule specifies that anticlockwise primitives are to be culled, then the non-intersection condition is fulfilled by the fact that the edge orientation is anticlockwise. In summary, the condition is fulfilled by the edge $v_0$, $v_1$, and so the primitive can be culled. This means that no further intersection testing is performed for the primitive. This culling may be performed for any (one or more) primitives that contain the edge $v_0$, $v_1$.

An advantage of the method illustrated in Figure 5 is that it only uses zero comparisons, which as previously mentioned are of virtually no cost. Another advantage of the method illustrated in Figure 5 is that it only requires the observation of a single pair of vertices of a primitive, where the primitive has any number of vertices that is greater than or equal to three. If the orientation of the edge can be derived from a single pair of vertices, by using zero comparisons, then this provides a very cheap and efficient method of reducing the number of intersection tests that have to be performed for a set of primitives. The method of Figure 5 may be particularly advantageous when used to process primitives that have a large number of edges as an entire primitive comprising n edges may be culled from the testing of a single edge. The method of Figure 5 may be used to process primitives with any alternative number of edges. Note that the subscripts 0, 1 and 2 to denote primitive vertices and their coordinates are used for exemplary means only. Other examples may use alternative combinations of indices or orderings of these subscripts.

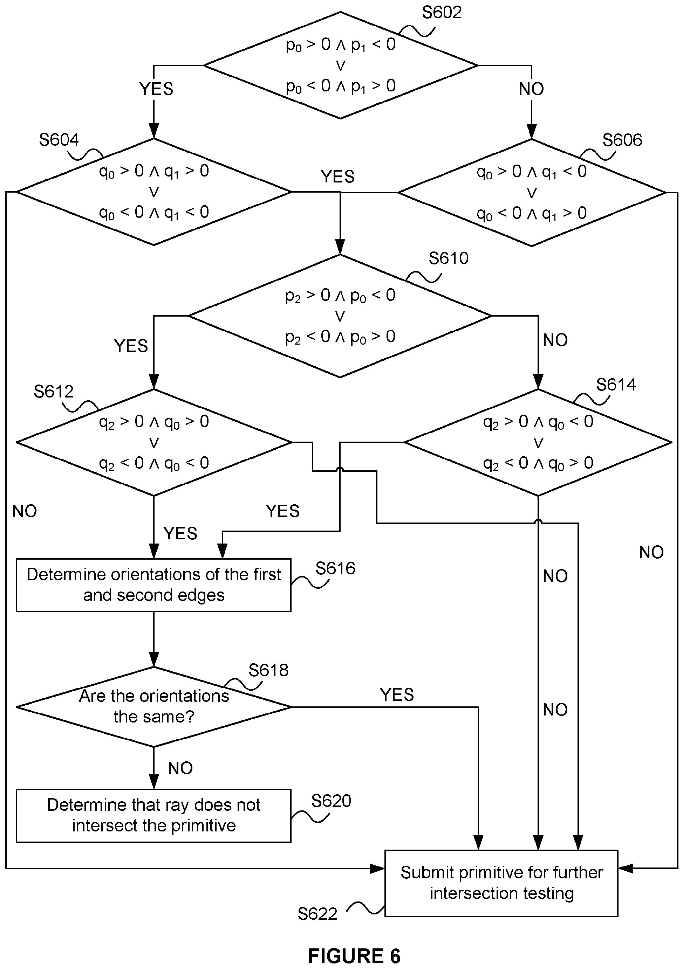

A second example of analysing the signs of coordinate data as illustrated in Figure 4 can be seen in Figure 6. As with Figure 5, Figure 6 illustrates a more detailed version of step S416 as illustrated in Figure 4. The analysis method illustrated in Figure 6 comprises analysing the vertex coordinates of a set of three or more vertices for a primitive. That is, the set of two or more vertices that is defined in step S404 of Figure 4 is, for the method of Figure 6, a set of three or more vertices. In many examples, the set of vertices comprises four vertices (corresponding to two edges without a common vertex). The set of three or more vertices may form at least two pairs of vertices, the first pair of vertices defining the first edge of the primitive and a second pair of vertices defining a second edge of the primitive. As with the method illustrated in Figure 5, it can be determined whether an edge of a primitive crosses one or more of the P and Q axes, in ray space, by analysing the signs of the ray-space coordinates of a pair of vertices that define an edge of the primitive, to define an edge orientation. The method of Figure 6 involves comparing the orientations of two edges of a primitive, and determining whether those edges have the same orientation. If the edges do not have the same orientation, then it may be determined that the ray does not interest the primitive.

The exemplary method illustrated in Figure 6 considers a set of three vertices $v_0, v_1, v_2$ that define a primitive. Each of the vertices $v_0, v_1, v_2$ is defined by a set of coordinate values in the space-coordinate system and, when projected into ray space, they are also defined by a corresponding set of coordinates in the ray-coordinate system, where each coordinate value for a vertex in the ray-coordinate system is a measurement of the vertex along a corresponding axis of the ray-coordinate system. The first vertex $v_0$ may be defined by a first set of ray-space coordinates $(p_0, q_0, r_0)$, the second vertex $v_1$ may be defined by a second set of coordinates $(p_1, q_1, r_1)$ and the third vertex $v_2$, may be defined by a third set of coordinates $(p_2, q_2, r_2)$. The vertices $v_0, v_1, v_2$ may define at least a first edge of the primitive $(v_0, v_1)$ and a second edge of the primitive $(v_0, v_2)$. As explained above, $r_i$ for each ray-space vertex may not be calculated when performing intersection testing for a primitive. It is noted that these vertex and edge references are only provided as examples, and that the method of Figure 6 may be used to analyse alternative edges/vertices of a primitive. The edges that are analysed in the method of Figure 6 are adjoining edges, in that they share the vertex $v_0$, in other examples the primitive edges that are used in this example may not be adjoining. For example, for a primitive with four or more edges the four vertices comprising two edges of the primitive may be completely distinct (i.e., two edges of the primitive may not share even one common vertex). The method of Figure 6 may be performed, for a primitive, against multiple different combinations of two or more edges that define the primitive. The method of Figure 6 may comprise analysing the coordinates of $v_0$, $v_1$ and $v_2$ along the P and Q axes, which are the two non-parallel axes that both transverse to the direction of the ray r.

The first three steps of Figure 6, steps S602, S604 and S606, are the same as corresponding method steps S502, S504 and S506 of Figure 5. That is, steps S602, S604 and S606 involve determining whether a first edge of the primitive, defined by vertices $v_0$, $v_1$ crosses one (but not both) of the P and Q axes. This method is described above with respect to Figure 5 and so will not be repeated herein.

If the answer to the tests of either step S604 or step S606 is yes, then it can be derived that the first edge of the primitive $(v_0, v_1)$ crosses (only) one of the P and Q axes. The method then proceeds to steps S610, S612 and S614 where the second of the two edges in the primitive is analysed. That is, the edge of the primitive defined by a second set of vertices, $(v_2, v_0)$, is analysed. This method is broadly the same as the method of steps S502, S504 and S506, but is performed for a different edge of the primitive. That is, at step S610 it is determined whether the sign of a first coordinate for a first vertex of the second pair of vertices, in ray space, is different from the sign of a first coordinate for a second vertex of the second pair of vertices. That is, at step S610 it is determined whether the first and second vertices $(v_2, v_0)$ do not share the same sign in one of their coordinates. Specifically, step S610 comprises determining whether the sign of a first coordinate of $v_2$ ($p_2$) is different to the sign of the corresponding first coordinate of $v_0$ ($p_0$). Similarly to what is described above with respect to Figure 5, in mathematical terms the condition under which $p_2$ and $p_0$ are determined to be different may be defined as follows:

$$(p_2 > 0 \wedge p_0 < 0) \vee (p_2 < 0 \wedge p_0 > 0)$$

Whilst in Figure 6 step S610 comprises comparing p coordinates, in an alternative example this step may comprise comparing a different coordinate of $v_2$ and $v_0$, such as the q coordinate.

If it is determined that the sign of the first coordinate for a first vertex of the second pair of vertices, in ray space, is different from the sign of a first coordinate for a second vertex of the second pair of vertices (i.e., if the answer to the test at step S610 is yes), then the method proceeds to step S612 in which is determined whether the sign of a second coordinate for a first vertex of the second pair of vertices, in ray space, is the same as the sign of a second coordinate for a second vertex of the second pair of vertices. That is, at step S612 it is determined whether the first and second vertices $v_2, v_0$ share the same sign in a second of their coordinates. Specifically, step S612 comprises determining whether the sign of a second coordinate of $v_2$, $(q_2)$ is the same of the sign of the corresponding second coordinate of $v_0$ $(q_0)$. In mathematical terms, the condition under which $q_2$ and $q_0$ are determined to be the same may be defined as follows:

$$(q_2 > 0 \wedge q_0 > 0) \vee (q_2 < 0 \wedge q_0 < 0)$$

Whilst in Figure 6 step S612 comprises comparing q coordinates, in an alternative example this step may comprise comparing a different coordinate of $v_2$ and $v_0$, such as the p coordinate.

If it is determined that the sign of the first coordinate for a first vertex of the second pair of vertices, in ray space, is the same as the sign of the first coordinate for a second vertex of the second pair of vertices (i.e., if the answer to the test at step S610 is no), then the method proceeds to step S614 in which is determined whether sign of the second coordinate for a first vertex of the second pair of vertices, in ray space, is different from the sign of the second coordinate for a second vertex of the first pair of vertices. That is, at step S614 it is determined whether the first and second vertices $v_2, v_0$ have a different sign in a second of their coordinates. Specifically, step S614 comprises determining whether the sign of a second coordinate of $v_2$ $(q_2)$ is different from the sign of the corresponding second coordinate of $v_0$ $(q_0)$. In mathematical terms, the condition under which $q_2$ and $q_0$ are determined to be different may be defined as follows:

$$(q_2 > 0 \wedge q_0 < 0) \vee (q_2 < 0 \wedge q_0 > 0)$$

Whilst in Figure 6 step S614 comprises comparing q coordinates, in an alternative example this step may comprise comparing a different coordinate of $v_2$ and $v_0$, such as the p coordinate.

In summary, steps S602 to S614 of Figure 6 comprise analysing the signs of the coordinate data for the set of two or more vertices in ray space. If the answer to either of method steps S604 or S606 is yes, then the method further comprises determining whether (i) the sign of a first coordinate for a first vertex of the second pair of vertices, in ray space, is different from the sign of the a first coordinate for a second vertex of the second pair of vertices and that the sign of a second coordinate for a first vertex of the second pair of vertices, in ray space, is the same as the sign of a second coordinate for a second vertex of the second pair of vertices (ii) the sign of the second coordinate for the first vertex of the second pair of vertices, in ray space, is different from the sign of the second coordinate for a second vertex of the second pair of vertices and that the sign of the first coordinate for the first vertex of the second pair of vertices, in ray space, is the same as the sign of the first coordinate for the second vertex of the second pair of vertices. In other words, the method comprises determining whether two of the edges in a primitive cross one (and only one) of the P and Q axes, in ray space (this axis may be different for the first and second pair of vertices). From this derivation, the method can proceed to step S616 at which the orientation of the edges are compared.

As with the method illustrated in Figure 5 it is noted that, whilst steps S602 to S614 are illustrated in a particular order, these steps can be performed in any order. The steps may be performed sequentially. Alternatively, the steps may be performed in parallel. The tests at steps S602 to S606, or the tests at steps S610 to S614, may be reversed (e.g., the test at step S602 may comprise determining whether the signs of $p_0$ and $p_1$ are the same).

At step S616, the analysis of the signs of the coordinate data for the first and second pairs of vertices in ray space is used to determine the orientations of the first and second edges of the primitive respectively. As defined above, the orientation of a primitive edge can be determined by observing the signs of the vertices that define that edge. For an edge that is defined by vertices $v_0$, $v_1$, the edge starts at $v_0$ and ends at $v_1$. Based on the signs of the coordinates that define each of these edges, the orientation of an edge can be determined based on whether it passes from the -p to +p half-space, from the +p to -p half-space, from -q to +q half-space, or from +q to -q half-space, for strictly positive measurements p and q. By observing of the signs of the p and q coordinates of both the first and second vertices, the orientations of the first and second edges can be determined. Unlike the method illustrated in Figure 5, it may not be necessary to know the orientation of the coordinate system in determining the orientations of the first and second primitive orientations. This is because the method of Figure 6 comprises comparing primitive edges to each other, instead of comparing those edges to a predetermined orientation. In other words, it is the relative orientation of the first and second primitives (i.e., relative to each other) that are considered by the method in Figure 6. Thus, at step S616, a left-handed coordinate system may be assumed in determining the orientation of the first and second primitive edges. The determination of these orientations is performed substantively as described above with reference to Figure 5.

At step S618 it is determined whether the orientation of the first edge of the primitive is different from the orientation of the second edge of the primitive. In other words, it is determined whether the orientations of the first and second edges are not the same. For the method in Figure 6, the non-intersection condition may be fulfilled if the orientation of the first edge of the primitive is different from the orientation of the second edge of the primitive. For example, if the orientation of the first edge is clockwise and the orientation of the second edge is anticlockwise, then the non-intersection condition may be fulfilled. Similarly, if the orientation of the first edge is anticlockwise and the orientation of the second edge is clockwise, then the non-intersection condition may be fulfilled. As explained above, for a primitive that is intersected by a ray, each edge of the ray will have the same orientation from the viewpoint of the ray. Thus, if it is determined that two edges of a primitive have a different orientation, then this implies that the ray does not intersect the primitive (i.e., that the primitive does not pass through the origin in ray space).

If the answer to the test at either of steps S604, S606, S610 or S612 is no, then the method may proceed to step S622 at which the primitive containing the edge is submitted for further intersection testing. By the end of steps S604 and S606 the method has derived from the signs of $p_0, p_1, q_o$ and $q_1$, whether the edge defined by vertices $v_0, v_1$ crosses one or more of the P and Q axes. If $p_0$ and $p_1$ have the same sign, then the edge does not cross the Q axis. If $q_o$ and $q_1$ have the same sign, then the edge does not cross the P axis. If $p_0$ and $p_1$ have different signs, then the edge does cross the Q axis. If $q_o$ and $q_1$ have different signs, then the edge does cross the P axis. Thus, if the vertices $v_0, v_1$ have different signs in both their p and q coordinates (i.e., if the answer to the test at S604 is no), then it can be derived that the edge crosses both the P and the Q axis. The same determination is made at steps S610 and S612 for the edge defined by vertices $v_2, v_0$. If it is determined that the edge crosses neither the P nor Q axis, or if it crosses both axes, then an orientation determination cannot be made for the edge and therefore the method proceeds to step S622 where the primitive is submitted for further intersection testing. In Figure 6, the further intersection testing may comprise analysing the signs of one or more different pairs of edges that define the primitive, to determine whether there is a pair of edges that both cross either (but not both) the P or Q axis (the crossed axis may be different for each edge). That is, the method of Figure 6 may be performed for at least one other pair of primitive edges. If all the pairs of primitive edges have been tested by the method of Figure 6 and step S620 has not been reached, then the subsequent intersection testing at step S622 may be the substantive intersection testing (e.g., floating-point calculations) that are defined above.

If the answer to the test at step S618 is yes, then the method also proceeds to step S622 and the primitive is submitted from further intersection testing. In this situation, there is insufficient information for it to be derived that there is not an intersection between the ray and the primitive. The intersection testing module may then go on to test a different set of pairs of primitive vertices against each other, to determine if there is at least one edge of the primitive that has a different orientation from another edge of the primitive.

If it is determined that the orientations of the first and second primitives are different, then the method proceeds to step S620 at which it is determined that the ray does not intersect the primitive.

The method illustrated in Figure 6 is advantageous as it doesn't require knowledge of the orientation of the coordinate system, or of a specific culling rule, to class a "miss" between a ray and a primitive. Thus, it increases the simplicity and efficiency of the intersection testing methods described herein.

An example of a primitive that may be culled using the method illustrated in Figure 6 is shown in Figure 8. The primitive 802 in Figure 8 has four ordered vertices $v_0, v_1, v_2, v_3$ which define the four edges of the primitive. The primitive 802 is illustrated in Figure 8 as being projected into the ray-coordinate system. It can be seen that the origin 804 of the ray in Figure 8 does not pass through the primitive, and so the ray does not intersect the primitive. This means that the primitive does not fully wind around the origin (i.e., not all edges of the convex primitive have the same orientation from the viewpoint of the ray). More specifically, the ray passes on the right-hand side of edges $v_1, v_z$ and $v_2, v_3$, so these two edges have a clockwise orientation with respect to the origin. The ray passes on the left-hand side of the directed edges $v_0, v_1$ and $v_3, v_0$, so these edges have an anticlockwise orientation with respect to the origin. If the method of Figure 6 is performed, for example, for the vertices defining edges $v_1, v_2$ and $v_0, v_1$, it will be determined that the orientations of these two edges are different. Thus, it can be determined, without performing detailed (e.g., floating-point) intersection testing, that the ray does not pass through the primitive, and therefore that there is a miss between the ray and the primitive. This means that subsequent intersection testing does not need to be performed for primitive 804. Whilst the primitive illustrated in Figure 8 comprises four edges, it will be appreciated that the method of Figure 6 may be performed on primitives comprising any number of edges (and corresponding vertices) that is greater than or equal to three (e.g., a triangle primitive).

In an alternative example to the example illustrated in Figure 6, instead of the orientations of primitive edges being determined dynamically, these determinations could be made once for all edges "upfront" (i.e., prior to intersection testing) and prestored in a memory in/local to the intersection testing unit. Based on the prestored results, the orientation comparisons could then be determined for the set of edges of each primitive.

The pairwise comparisons mentioned herein may be inefficient for higher order polygons. For higher order polygons, it may be more efficient to mark a first instance of an edge orientation as the edges of a primitive are parsed and to cull the primitive as soon as a record of two edges of the primitives having different orientations occurs. This means that each edge is only analysed once, instead of being analysed multiple times as may happen with pairwise comparisons.

In some examples of the method illustrated in Figure 4, analysing the signs of the coordinate data for the set of two or more vertices in ray space comprises analysing the signs for all the vertices in a complete set of vertices that define the primitive. That is, in some examples the method of Figure 4 comprises observing all the vertices of a primitive in ray space. Analysing the signs of the coordinate data, in these examples, may comprise analysing a sign of a first coordinate for all the vertices in the complete set of vertices. Analysing the signs of the coordinate data may alternatively comprise analysing a sign of two coordinates for all the vertices in the complete set of vertices.

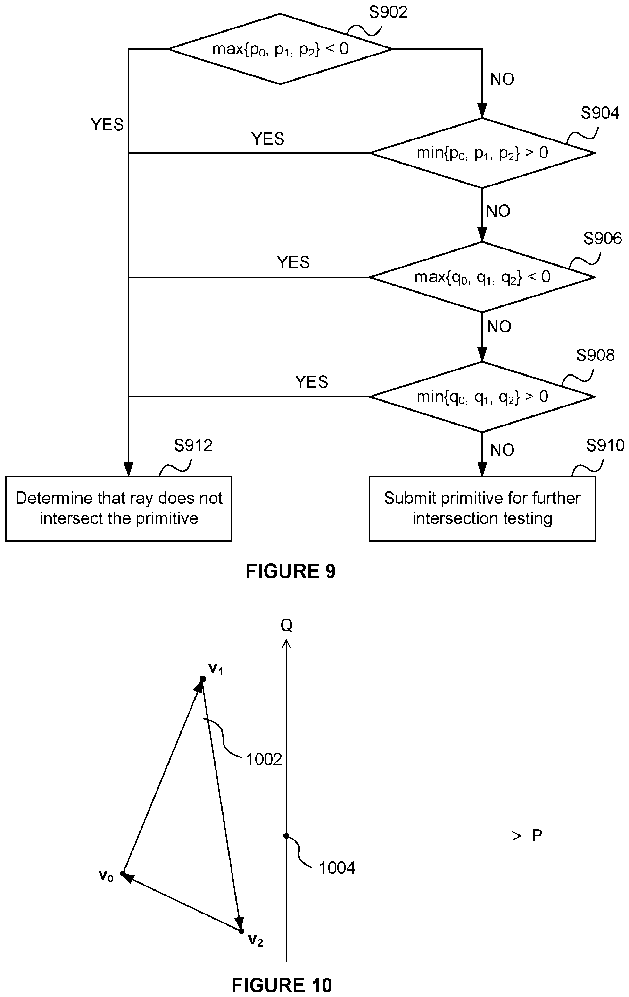

Another example of the steps 416 of Figure 4 is illustrated in Figures 9 and 10. In Figures 9 and 10 the exemplary primitive to be processed comprises three vertices, with each of the three pairs of vertices defining a respective edge of the primitive. The method of Figure 9 is initiated once the coordinate data for the set of vertices has been projected into ray space using the data for the ray. That is, at the beginning of Figure 9 each vertex that defines the primitive has been projected onto the pair of axes aligned with the basis vectors P and Q. As described above, when the coordinate data for the primitive is projected into ray space, each vertex of the primitive is defined by a set of coordinate values in the ray-coordinate system, where each coordinate value is a measurement of the vertex along a corresponding axis of the ray-coordinate system. For the primitive 204, the first vertex $v_0$ may have a set of ray-space coordinates $(p_0,q_0,r_0)$, the second vertex $v_1$ may have a set of coordinates $(p_1,q_1,r_1)$ and the third vertex $v_2$ may have a set of coordinates $(p_2,q_2,r_2)$ (note that $r_i$ may not be calculated for the reasons explained above).

It is worth noting that, whilst steps S902 to S908 in Figure 9 are illustrated in a particular order, these steps can be performed in any order. The steps may be performed sequentially. Alternatively, the steps may be performed in parallel. It is also worth noting that the "min" and "max" annotations in Figure 9 have been used purely for brevity and ease of understanding, but that steps S902 to S908 should preferably be performed using zero comparisons as demonstrated in the text below.

In the method of Figure 9, the non-intersection condition is fulfilled if all the signs of at least one ray-space coordinate value, among all the vertices in the complete set of (ordered) vertices for the primitive, are the same. That is, if all the vertices of the primitive, in ray-space, share the same sign in at least one of their first or second coordinates, it is determined that the ray does not intersect the primitive. This can be determined as the primitive must lie strictly in a half-space of 2D ray space, and therefore cannot overlap (i.e., intersect) with the origin.

At steps S902 and S904 the method determines whether the sign of a first coordinate, in ray space, is the same for all the vertices in the complete set of ordered vertices that define the primitive. The first coordinate of the vertices may be measured along a first axis of the two non-parallel axes that define the ray-coordinate system, or ray space. The first coordinate of the vertices may be measured along the P axis in ray space. Thus, more specifically, at step S902 the method determines whether all the coordinates $p_0,p_1$ and $p_2$, which define the position of vertices $v_0$, $v_1$ and $v_2$, respectively, along the P axis in ray space, are less than zero. That is, the method determines whether all the signs of the coordinates $p_0$, $p_1$ and $p_2$, in ray space, are negative. The method may determine whether all the signs of coordinates $p_0$, $p_1$ and $p_2$, in ray space, are strictly negative. This condition may be written mathematically as follows:

$$(p_0 < 0 \land p_1 < 0 \ \land p_2 < 0)$$

If all the signs of coordinates $p_0$, $p_1$ and $p_2$, in ray space, are strictly negative, then the non-intersection condition is fulfilled because the p coordinates for the primitive vertices share the same sign. Thus, the method proceeds to step S912 in which it is determined that the ray does not intersect the primitive.

An example of a primitive that fulfils the test at step S902 in Figure 9 is illustrated in Figure 10. Primitive 1002 in Figure 10 has three vertices $v_0$, $v_1$ and $v_2$. Each of vertices $v_0$, $v_1$ and $v_2$ have been projected into ray space in Figure 9, as these vertices are aligned with the PQ plane. It can be seen, in Figure 9, that all $v_0$, $v_1$ and $v_2$ are located on the left-hand side of the PQ plane in ray space. That is, all the vertices have a negative p coordinate, or a p coordinate that is strictly less than zero. As all the vertices in the primitive have a negative p coordinate, the primitive does not cross the Q axis. This means that the primitive does not intersect the ray-space origin 1004. As has been mentioned herein, the origin 1004 of the P and Q axes, in ray space, is the origin of the ray that is being tested against the primitive. Thus, if the primitive 1002 doesn't intersect the origin 1004 of the ray, then the primitive cannot be intersected by the ray that defines that origin, being the crossing point of the P and Q axis.

Thus, if all the vertices of a primitive share the same sign in at least one of their coordinates, this indicates that the primitive is not intersected by the ray. The signs of the primitive can therefore be used straightforwardly to determine definitively that the ray does not intersect the primitive.

If the primitive does not fulfil the test of step S902, then the method proceeds to step S904 in which it is determined whether all the coordinates $p_0$, $p_1$ and $p_2$ are greater than zero. That is, the method determines whether all the signs of the coordinates $p_0$, $p_1$ and $p_2$, in ray space, are positive. The method may determine whether all the signs of coordinates $p_0$, $p_1$ and $p_2$, in ray space, are strictly positive. If all the signs of coordinates $p_0$, $p_1$ and $p_2$, in ray space, are strictly positive, then the non-intersection condition is fulfilled because the coordinates share the same sign. This test may be written mathematically as follows:

$$(p_0 > 0 \wedge p_1 > 0 \wedge p_2 > 0)$$

Thus, the method proceeds to step S912 in which it is determined that the ray does not intersect the primitive. More specifically, if all the signs of coordinates $p_0, p_1$ and $p_2$, in ray space, are strictly positive, then this indicates that all $v_0$, $v_1$ and $v_2$ are located on the right-hand side of the PQ plane in ray space. As all the vertices in the primitive have a (strictly) positive p coordinate, it can be derived that the primitive does not cross the Q axis. Thus, similarly to as is described above with respect to Figure 10, the primitive cannot be intersected by the ray that defines that origin, being the crossing point of the P and Q axis.

The method of Figure 9 may comprise checking both the p and q coordinates of the primitive, in ray space, to determine whether these coordinates are either (i) all strictly negative, or (ii) all strictly positive. If the primitive does not fulfil the test of step S904 (i.e., if the answer to the test is no), then the q coordinates of $v_0$, $v_1$ and $v_2$ are analysed to determine whether the non-intersection condition is fulfilled. That is, in steps S906 and S908 the method determines whether the sign of a second coordinate, in ray space, is the same for all the vertices in the complete set of ordered vertices that define the primitive. The second coordinate of the vertices may be measured along a second axis of the two non-parallel axes that define the ray-coordinate system. The second coordinate of the vertices may be measured along the Q axis in ray space. Thus, more specifically, at step S906 the method determines whether all the coordinates $q_0$, $q_1$ and $q_2$, which define the position of vertices $v_0$, $v_1$ and $v_2$ respectively, are less than zero along the Q axis in ray space. That is, the method determines whether all the signs of the coordinates $q_0$, $q_1$ and $q_2$, in ray space, are negative. The method may determine whether all the signs of coordinates $q_0$, $q_1$ and $q_2$, in ray space, are strictly negative. This test may be written mathematically as follows:

$$(q_0 < 0 \wedge q_1 < 0 \wedge q_2 < 0)$$

If all the signs of coordinates $q_0$, $q_1$ and $q_2$, in ray space, are strictly negative, then the non-intersection condition is fulfilled because the coordinates share the same sign. Thus, the method proceeds to step S912 in which it is determined that the ray does not intersect the primitive. More specifically, if all the signs of coordinates $q_0$, $q_1$ and $q_2$, in ray space, are strictly negative, then this indicates that all $v_0$, $v_1$ and $v_2$ are located in the lower half of the PQ plane in ray space. As all the vertices in the primitive have a negative q coordinate, it can be derived that the primitive does not cross the P axis. Thus, as with steps S902 and S904, the primitive cannot be intersected by the ray that defines that origin, being the crossing point of the P and Q axis.

If the primitive does not fulfil the test of step S906 (i.e., if the answer to the test is no), then the method proceeds to step S908 in which it is determined whether all the coordinates $q_0$, $q_1$ and $q_2$, are greater than zero. That is, the method determines whether all the signs of the coordinates $q_0$, $q_1$ and $q_2$, in ray space, are positive. The method may determine whether all the signs of coordinates $q_0$, $q_1$ and $q_2$, in ray space, are strictly positive. This test may be written mathematically as follows:

$$(q_0 > 0 \wedge q_1 > 0 \wedge q_2 > 0)$$

If all the signs of coordinates $q_0$, $q_1$ and $q_2$, in ray space, are strictly positive, then the non-intersection condition is fulfilled because the coordinates share the same sign. Thus, the method proceeds to step S912 in which it is determined that the ray does not intersect the primitive. More specifically, if all the signs of coordinates $q_0$, $q_1$ and $q_2$, in ray space, are strictly positive, then this indicates that all $v_0$, $v_1$ and $v_2$ are located on the right-hand side of the PQ plane in ray space. As all the vertices in the primitive have a positive q coordinate, it can be derived that the primitive does not cross the P axis. Thus, as with steps S902, S904 and S906, the primitive cannot be intersected by the ray that defines that origin, being the crossing point of the P and Q axis.

Although the method illustrated in Figure 9 comprises looking at both the p and q coordinates of the primitive vectors in ray space, an alternative method may comprise looking at only the p coordinates, or only the q coordinate, of those vectors. If the answer to the test in either of steps S904 or S906, in Figure 9, is "yes" then the method may determine that the ray does not intersect the primitive without analysing the q coordinates of the vertices. As mentioned above, method steps S902 - S908 may be performed in any suitable order, or alternatively may be performed in parallel. The example in Figures 9 and 10 is provided for a primitive that is defined by three ordered vertices, it will be appreciated that the same method may be performed for primitives comprising any number of vertices that is greater than or equal to three.

An advantage of the method illustrated in Figure 9 is that the orientations of the edges of the primitive do not need to be determined for it to be determined that the ray does not intersect the primitive.

With the methods described above, if the non-intersection condition is fulfilled then it is determined that the ray does not intersect the primitive and no further intersection testing is performed for that primitive. If no further intersection testing is performed for a primitive, then that primitive may be described as having been "culled". The term "cull" may be defined as the removal of a primitive from the intersection testing pipeline, such that further testing is not performed from that primitive. The primitive may be culled by removing data defining that primitive from the temporary memory that is used to process that primitive. The primitive may alternatively be culled by associating a flag with the primitive to indicate that no further processing is to be performed for that primitive. Alternatively, primitives for whom further intersection testing is required may be marked (e.g., with a data flag), and primitives for whom no further testing is required may not be marked. Thus, the intersection testing module may know to select only the marked primitives for further testing. As described above, culling a primitive when it is determined that the ray does not intersect the primitive is advantageous as it reduces the number of subsequent, processor-intensive, intersection tests that may be performed for all primitives.

In the examples detailed above, the coordinate data for each vertex of the set of two or more vertices, in ray space, comprises (i) a first coordinate of the coordinate data which is measured along a first axis of the two non-parallel axes, and (ii) a second coordinate which is measured along a second axis of the two non-parallel axes. In other words, the vertex coordinates that are analysed in the methods of Figures 4-6 and 9 are the coordinates along the two non-parallel axes that may be orthogonal to the direction of the ray (i.e., the P and Q axes). The axes may also be referred to as the minor axes of the ray, as neither axis corresponds to the component of the ray direction vector that has the largest magnitude. That is, the minor axes in ray space represent the two lesser components of ray direction. The major axis of the ray, which may be orthogonal to the P and Q axes, is the axis that corresponds to the component of the ray direction vector that has the largest magnitude. As only two ray-space axes are considered in the methods of Figures 4-6 and 9, the vertex coordinates may be described as being projected into two-dimensional (or 2D) ray space.

The methods described above act to increase the efficiency of intersection testing in a ray tracing system. The methods may use coordinate data that has been determined from vertex projection to perform a series of cheap tests that determine whether a ray does not intersect a primitive. Using the coordinate data that is determined from vertex projection is advantageous as this is data that is determined at the beginning of the intersection testing process, and this data is determined once per vertex only. Thus, efficiencies can be gained in using pre-prepared data to perform the methods described herein.

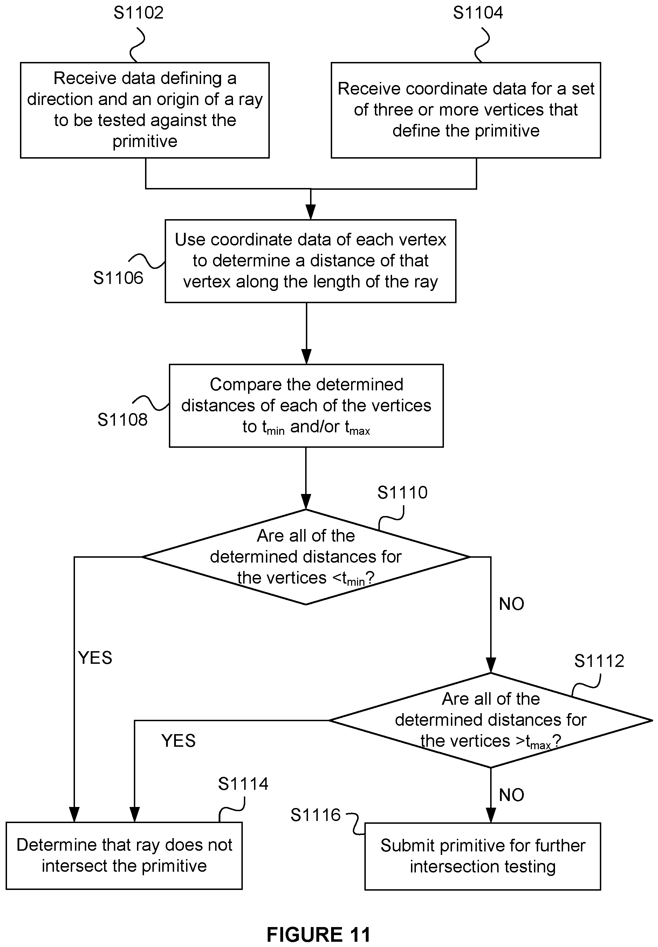

A second method of processing a primitive as part of intersection testing in a ray tracing system is illustrated in Figure 11. As with the method illustrated in Figure 4, the method of Figure 11 is performed before floating-point calculations are performed in respect of the ray for the primitive. If the outcome of the method is a determination that the ray does not intersect the primitive, no further intersection testing may be performed on the ray in respect of the primitive. In other words, the substantive floating-point calculations of the intersection testing process may not be performed for the ray in respect of the primitive. As mentioned above, each primitive is defined by an ordered set of vertices. The method may be performed by an intersection testing module, such as the module 108 illustrated in Figure 1.

Steps S1102 and S1104 of Figure 11 are the same as corresponding steps S402 and S404 of Figure 4. That is, the method begins at step S1102, at which data defining a direction and an origin of a ray to be tested against the primitive is received. In other words, data defining the ray to be tested against a primitive is received. The ray data may be received by the intersection testing module 108 of Figure 1. The ray data may define a primary ray or a secondary ray. Ray data may be fetched by the intersection testing module 108 from a memory that is accessible by the intersection testing module. As described above, the direction and origin of the ray are used to project the vertices of a primitive into a ray-coordinate system for that ray.

At step S1104 coordinate data for a primitive is received. More specifically, the coordinate data may be received for a set of vertices that define the primitive. In the method of Figure 11, the coordinate data comprises coordinates for a set of three or more vertices that define the primitive. The set of three or more vertices may be a complete set of vertices that define the primitive. That is, the set of vertices may comprise all the vertices of the primitive. The coordinate data may be received at the same time as the ray data. The coordinate data may be received sequentially after, or before, the ray data. The coordinate data may be received from a pipeline of primitive data, where the primitives are to be processed sequentially by the ray. The coordinate data may be received from a different location to the ray data. The set of two or more vertices defines at least one edge of the primitive. It is worth noting at this point that, similar to what has been described with reference to Figure 6, the distances (as a function of ray length) could be made once for all vertices "upfront" (i.e., just prior to intersection testing, but after the ray data has been fetched) and prestored in a memory in/local to the intersection testing unit. Based on the prestored results, the distances could then be determined for each primitive by retrieving data of the vertices that define that primitive.

Once the ray data and the coordinate data have been received by the intersection testing module, then at step S1106 the coordinate data of each vertex is used to determine a distance component of that vertex along the direction/length of the ray. That is, observing the coordinate data of a first vertex of a primitive $v_0$, the distance along the direction/length of the ray at which that vertex is located may be determined. This determination may be performed for each of the vertices $v_0, v_1 \ldots v_n$ that define the primitive. The 'ray length' may be given by the magnitude of the direction vector, D, of the ray. The ray direction/length extends from the origin of the ray (which may or may not be the origin of the scene) to positive infinity (with respect to its parameter space), whereas the ray, as a line segment, may extend out towards positive and/or negative infinity (based on the values of $t_{min}$ and $t_{max}$). The determination of the distance component along the direction/length of the ray at which a vertex is located is explained in further detail below.

At step S1108, the determined distance component of each of the vertices is compared to at least one of a minimum and a maximum valid distance value for the ray. That is, the determined distance component of each vertex that defines the primitive, along the direction/length of the ray, is compared to at least one of a minimum and maximum valid distance value for the ray. The minimum and maximum valid distance values for the ray may otherwise be referred to as the minimum and maximum culling distances, or culling distances, or collectively as a distance culling interval, for the ray ($t_{min}$ and $t_{max}$). The minimum and maximum culling distances define a range of distance values, along the length of a ray, within which the ray is valid such that an intersection between the ray and a primitive may occur. The initial values of $t_{min}$ and $t_{max}$ are typically predetermined prior to intersection testing, but their values may be dynamically varied from these initial values during intersection testing. For example, during intersection testing, $t_{max}$ and/or $t_{min}$ may be updated to a value that is equal to the distance between the ray origin and a determined intersection, e.g., an opaque intersection for $t_{max}$ and/or a transparent/translucent intersection for $t_{min}$. This is usually done such that $t_{max}$ is only ever decreased and $t_{min}$ is only ever increased, such that the culling interval only ever reduces in size (culling more geometry) overtime, as more information about the scene is garnered during traversal. During intersection testing of a ray against a node or against a primitive, if there is an intersection at a point on the ray with a t value of $t_{int}$, the minimum culling distance $t_{min}$ is used so that the intersection is not accepted if $t_{int} < t_{min}$ (or if $t_{int} \leq t_{min}$ in alternative examples), and the maximum culling distance $t_{max}$ is used so that the intersection is not accepted if $t_{int} > t_{max}$ (or if $t_{int} \geq t_{max}$ in alternative examples). So, by comparing the distance components of the primitive vertices along the direction/length of the ray to $t_{min}$ and $t_{max}$, a determination can be made as to whether the ray does not intersect the primitive.

The method of Figure 11 comprises at least one determination step S1110, S1112. At step S1110 it is determined whether the determined distance components for all the vertices of the set of vertices that define the primitive are less than (or alternatively less than or equal to) $t_{min}$. That is, it is determined whether all the determined distance components for the vertices are less than the minimum valid distance for the ray. In other words, for the condition in step S1110 to be true, all the vertices in the set of vertices must have a distance value, along the direction/length of the ray, that is less than $t_{min}$. If all the vertices have a distance value that is less than $t_{min}$, then this implies that the ray does not intersect the primitive, as the primitive is not within the range of distance values within which the ray is valid. To elaborate, the primitive is not within the range of distance values within which an intersection with the ray is valid, where the distance value to any such intersection point is a normalised linear combination (as the primitive is planar) of the set of distance values given by the set of vertices defining the primitive, and therefore will also satisfy the same $t_{min}$ comparison criterion. In Figure 11, if the answer to the test at step S1110 is no, then the method proceeds to step S1112.

Similarly to step S1110, at step S1112 it is determined whether the determined distance components for all the vertices of the set of vertices that define the primitive are greater than (or alternatively greater than or equal to) $t_{max}$. In other words, for the condition in step S1112 to be true, all the vertices in the set of vertices must have a distance value, along the direction/length of the ray, that is greater than $t_{max}$. That is, it is determined whether all the determined distance components for the vertices are greater than the maximum valid distance for the ray. If all the vertices have a distance value that is greater than $t_{max}$, then this implies that the ray does not intersect the primitive, as the primitive is not within the range of distance values within which the ray is valid. The reasoning for this is analogous to the minimum case.

The method of Figure 11 comprises both of steps S1110 and S1112. That is, the method of Figure 11 comprises comparing the determined distance components of each of the vertices to both of the minimum and maximum valid distance values for the ray. It will be appreciated that, in some examples, the method may comprise only one of method steps S1110 and S1112. That is, the method may compare the determined distance components of each of the vertices to only one of the minimum or maximum valid distance values for the ray. In other words, the method may comprise determining whether all the vertices are less than $t_{min}$. The method may alternatively comprise determining whether all the vertices are greater than $t_{max}$. It is noted that step S1112 does not have to be performed if the answer to step S1112 is yes. Alternatively, in another example, method steps S1112 and S1110 may be reversed so that step S1112 is performed first, and step S1110 is performed if the answer to the test at step S1112 is no. In this example, step S1110 will not have to be performed if the answer to step S1112 yes. In yet another example (which may be particularly beneficial if the method is implemented in hardware, e.g., in fixed-function circuitry), method steps S1110 and S1112 may be performed in parallel.

If the answer to step S1110 is yes (i.e., all the determined distance components for the vertices are less than the minimum valid distance for the ray), the method proceeds to step S1114 at which it is determined that the ray does not intersect the primitive. Similarly, if the answer to step S1112 is yes (i.e., all the determined distance components for the vertices are greater than the maximum valid distance for the ray) then the method proceeds to step S1112. That is, the distance values for the primitive are all less than $t_{min}$, or are all greater than $t_{max}$, then this implies that there is a "miss" between the ray and the primitive. Alternatively, if the answer to the test both of steps S1110 and S1112 is no (i.e., the non-intersection condition is not fulfilled) the method proceeds to step S1116 at which the primitive is submitted for further intersection testing. That is, it is determined at S1116 that the intersection testing module has insufficient information to determine whether there is not an intersection between the ray and the primitive. In other words, the intersection testing module is configured to perform further intersection testing of the ray on the primitive in response to determining that: (i) it is not the case that the determined distance components for all the vertices of the primitive are less than the minimum valid distance, and (ii) it is not the case that the determined distance components for all the vertices of the primitive are greater than the maximum valid distance. So, subsequent intersection testing (e.g., floating-point calculations) must be performed to reach this determination.

The distance component of each vertex along the direction/length of the ray is determined by observing a first coordinate of each of the vertices. That is, the distance component of each vertex along the direction/length of the ray may be determined by observing a single set of coordinates that are measured along a single axis of a coordinate system. The coordinate system along which the distance of each vertex along the direction/length of the ray is determined may be the space-coordinate system, or alternatively it may be the ray-coordinate system. Note that the first coordinate that is referenced with respect to Figure 11 may not be the same as the first coordinate referenced above with respect to Figure 4. Observing a single coordinate of each primitive vertex is advantageous as it simplifies the intersection testing method described herein.

As has been described above, each vertex that defines a primitive has a set of coordinate values in the space-coordinate system, where each coordinate value is a measurement of the vertex along a corresponding axis of the space-coordinate system. For example, a first primitive vertex $v_0$ may have a set of coordinates $(x_0, y_0, z_0)$. As is illustrated in Figure 2, a ray that extends through the space-coordinate system may have a direction component that is measured along each of the X, Y and Z axes. A major axis of the ray can be identified as being the axis for which the component of the direction vector for the ray has the largest magnitude. As an example, in Figure 2 the major axis of the ray is the Z axis, as the magnitude of the ray direction is greatest along this axis (i.e., $D_z > D_x, D_y$, so $D_z = D_{maj}$). The remaining two axes that are not identified as the major axes (e.g., the X and Y axes in Figure 2) are identified as the minor axes. Note that the component of the ray direction along the ray major axis is not zero, as otherwise this would imply that the direction vector is zero which would be invalid.

The comparison of determined distance components of each of the vertices to at least one of a minimum and a maximum valid distance value for the ray may comprise observing the coordinate data for the vertices in a space-coordinate system in which the primitive is defined. As mentioned above, the space-coordinate system may be a world-space coordinate system or an instance-space coordinate system. The first coordinate that is observed to determine the distance of each vertex along the direction/length of the ray may be measured along the major axis of the ray (denoted its ray-major coordinate). That is, the first vertex coordinates may be along an axis that corresponds to the component of the ray direction vector that has the largest magnitude. An advantage of observing the distance in this way is that the coordinates of primitive vertices along this axis are most aligned with the coordinates of the ray direction/length, and so the correct results can be obtained when coordinate values are measured along this axis. By comparison, observing distances along a minor axis for the ray where the ray direction has a zero component along this minor axis may result in erroneous distance measurements (due to division/multiplication by zero, see below for more detail).

The method of Figure 11 may further comprise projecting the coordinate data for the set of three or more vertices into ray space using the ray data, wherein the ray space has two non-parallel axes that are both transverse to the direction of the ray, and the ray-space frame of reference associated with the two non-parallel axes is centred at a point on the ray such that the ray is represented as that point on the two non-parallel axes in the ray space, and where that point is the origin of the ray space. In other words, in ray space, the ray is located at the intersection of the two non-parallel axes and, when considered in world/instance space, the origin of the ray space is located on the ray. This origin of the ray space, which is located on the ray, may or may not be the same point as the ray origin (when considered in world/instance space). When the vertex coordinates of $v_0$ are projected from the space-coordinate system into the ray co-ordinate system they may be expressed as $(p_0, q_0, r_0)$. It has been mentioned above that the p and q coordinates of a vertex, in ray space, may be transverse to the direction of the ray. The r coordinate, in contrast, is parallel to the direction of the ray (and in some instances may be coincident with the direction of the ray). Thus, it is the r coordinate that can be used to provide an indication of the distance of each primitive vertex along the direction/length of the ray.

Once the coordinate data for the set of three or more vertices has been projected into ray space (which may be performed as a step of intersection testing), then the comparison of the determined distances of each of the vertices to at least one of a pair of minimum and maximum distance values for the ray may be performed using the projected coordinate data. That is, the method of Figure 11 may use ray-space projected vertex coordinates along the third ray-space axis to calculate the distance of the primitive along the direction/length of the ray. This may be done by interpolating the $r_i$ coordinates, storing the third ray-space axis for each vertex of the primitive, by their corresponding barycentric data (or another similar set of parameters for higher order primitives) to produce a third ray-space coordinate for the intersection point between the ray and the primitive. This ray-space coordinate is then divided by the magnitude of the ray direction vector (i.e., the ray length) to get the (signed) Euclidean distance for the intersection. This distance can then be divided once more by the magnitude of the ray direction vector (i.e., the ray length) to get the distance as a (signed) multiple of ray lengths). Alternatively, the method may comprise using the original coordinate data to calculate an indication of a coordinate value for each vertex along an axis in the space-coordinate system for which the component of the ray direction vector has the largest magnitude. That is, the projected coordinate data may be used to calculate an indication of a coordinate value for each vertex along the major axis. This may be done by interpolating the ray-major coordinates by their corresponding barycentric data (or another similar set of parameters for higher order primitives) to produce a ray-major coordinate for the intersection point between the ray and the primitive. The coordinate for the intersection point is then divided by the ray's major component to obtain a distance as a (signed) multiple of the ray lengths. This distance can then be multiplied by the magnitude of the ray direction vector (i.e., the ray length) to get the (signed) Euclidean intersection distance. This second method involves reduced floating-point arithmetic and so provides efficiency advantages over the first.. Note that the sign of the intersection distance indicates whether the distance travelled is in the direction of the ray or opposite to that direction. Observing the intersection distance as a (signed) multiple of ray lengths is generally preferable to the (signed) Euclidean distance as the former distance is not affected by any scaling component of an instance transform operation applied to the ray.

Further to Figure 11 the indication of a coordinate value along the major axis of the ray may comprise performing a scaling operation on that coordinate value. That is, the indication of a coordinate value along the major axis of the ray may comprise a rescaled version of the vertex coordinate, in ray space, that indicates the space-coordinate value. In other words, the method may initially comprise looking at the component of these distances that are measured along the major axis. Then, to correctly adjust these components to calculate distances as multiples of ray lengths, each of the first coordinates may be rescaled by a predetermined scaling factor. This scaling factor may be constant or ray dependent. This scaling factor may be the inverse (i.e., reciprocal) of the major component of the ray direction (where this can be precomputed per ray and stored as ray data). The rescaling by a predetermined scaling factor may involve multiplying the major axis components of the vertices by that scale factor. For example, this may involve multiplying these values by the inverse of the major component of the ray direction. That is, each of the coordinates may be scaled by multiplying these components the inverse of $D_{maj}$ (e.g., $D_z$ with respect to Figure 2), i.e., $1/D_{maj}$.

The calculation of the component of the first vertex coordinate that is projected onto the major axis may more specifically be performed such that:

$$r'_i = \frac{1}{D_{maj}} r_i$$

In the above equation, $r_i$ is the coordinate of an $i^{th}$ vertex $v_i$ in ray space and $0 \leq i < n$, $D_{maj}$ is the major component of the ray direction and $r'_i$ is the rescaled vertex coordinate of the $i^{th}$ vertex. These rescaled ray-major coordinates of the vertices are then compared to the $t_{min}$ and $t_{max}$ values as outlined above. The culling bounds are given in terms of multiples of ray lengths, for example, a $t_{min}$ value of 1.0 indicates that the valid segment of the ray begins after a single ray direction/length has been travelled from the ray origin.

Rather than rescaling each ray-major coordinate of every vertex for every ray versus primitive test, and as the rescaled values may have no use other than for this early primitive culling (e.g., they are not output as intersection attributes), it may be more cost effective to rescale the $t_{min}$ and $t_{max}$ values instead. This provides cost savings, as these two values are usually per-ray attributes (i.e., stored as part of the ray data) and therefore the arithmetic may be performed upfront and once per ray only. In other words, the method of Figure 11 may instead further comprise scaling the minimum and maximum valid distance values for the ray using the major component of the ray direction vector ($D_{maj}$), i.e., the inverse/reciprocal scaling factor to the vertex case. As described above, the major axis is the axis along which the greatest magnitude of the ray direction is measured. Each of $t_{min}$ and $t_{max}$ may be scaled by multiplying these values by the major component of the ray direction vector. That is, each of $t_{min}$ and $t_{max}$ may be scaled by multiplying these values by $D_{maj}$ (.e.g., $D_z$ with respect to Figure 2).

The calculation of the component of $t_{min}$ that is projected onto the major axis may more specifically be performed such that:

$$t'_{min} = D_{maj} t_{min}$$

In the above equation, $t_{min}$ is the minimum valid distance value for the ray, $D_{maj}$ is the major component of the ray direction (in the space-coordinate system) and $t'_{min}$ is the rescaled minimum valid distance value for the ray. The above calculation may comprise rescaling $t_{min}$. That is, the above calculation may rescale $t_{min}$ by a factor of $D_{maj}$.

Similarly, the calculation of the component of $t_{max}$ that is projected onto the major axis may more specifically be performed such that:

$$t'_{max} = D_{maj} t_{max}$$

In the above equation $t_{max}$ is the maximum valid distance value for the ray, $D_{maj}$ is the major component of the ray direction (in the space-coordinate system) and $t'_{min}$ is the rescaled maximum valid distance value for the ray. That is, the above calculation may rescale $t_{max}$ by a factor of $D_{maj}$. The ray-major coordinates of the vertices are then compared to these rescaled $t_{min}$ and $t_{max}$ values as outlined above. Rescaling the culling bounds by the inverse scale factor to the one used in rescaling the vertex coordinates results in the same logical comparison. These modified culling bounds are now not given in terms of multiples of ray lengths, but instead given as absolute distances along the ray major axis. For example, a $t'_{min}$ value of 1.0 indicates that the valid segment of the ray begins after a unit distance has been travelled along the ray major axis from the ray origin.

As with the method of Figure 4 described above, if the non-intersection condition is fulfilled then it is determined that the ray does not intersect the primitive and no further intersection testing is performed in respect of the ray for that primitive. If no further intersection testing is performed for in respect of a ray for a primitive, then that primitive may be described as having been "culled". The term "cull" may be defined as the removal of a primitive from the intersection testing pipeline, such that further testing is not performed from that primitive. The primitive may be culled by removing data defining that primitive from the temporary memory that is used to process that primitive. The primitive may alternatively be culled by associating a flag with the primitive to indicate that no further processing is to be performed for that primitive. Alternatively, primitives for whom further intersection testing is required may be marked (e.g., with a data flag), and primitives for whom no further testing is required may not be marked. Thus, the intersection testing module may know to select only the marked primitives for further testing. As described above, culling a primitive when it is determined that the ray does not intersect the primitive is advantageous as it reduces the number of subsequent, processor-intensive, intersection tests that may be performed for that primitive.

In contrast, if it is determined that the non-intersection condition is not fulfilled, then it cannot be determined that the ray does not intersect the primitive. Note that this does not imply that the ray has intersected the primitive. Rather, if the non-intersection condition is not fulfilled then it can be determined that there is not enough data, at the present step in the processing pipeline, to determine whether there is not an intersection between the ray and the primitive. Thus, further intersection testing must be performed for the primitive to definitively determine whether there is an intersection. Thus, in response to determining that the non-intersection condition is not fulfilled, the methods described above may further comprise performing further intersection testing on the primitive. The further intersection testing may comprise floating-point operations (e.g., edge testing by the calculation of 2D cross product values).

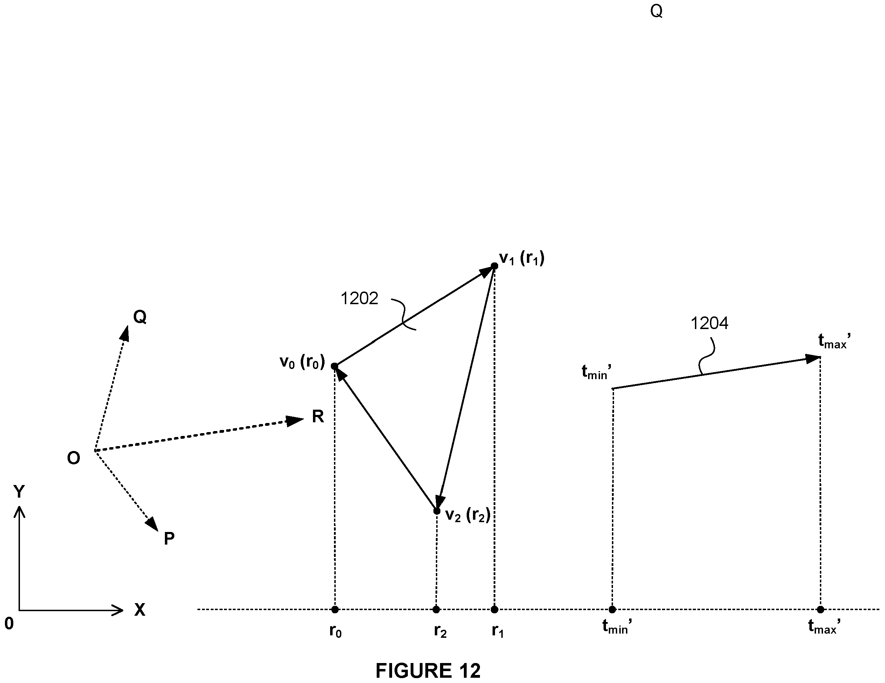

An example of a primitive 1202 that may be culled using the method illustrated in Figure 11 is shown in Figure 12. The primitive 1202 comprises three vertices ($v_0, v_1, v_2$). Each vertex of the primitive is associated with a set of coordinates in the space-coordinate system. The primitive is tested for intersection against a ray 1204. The ray 1204 has a direction (shown as the third ray-space axis R) and an origin O that are defined in the space-coordinate system. The ray also has minimum and maximum culling distances $t_{min}, t_{max}$, which indicate a range of distances along the direction/length of the ray within which an intersection between a ray and a primitive may be determined as valid. In this example, the major axis for the ray (i.e., the axis along which the magnitude of the ray direction is greatest) is the X axis. Using the method described above, the components of the primitive's vertex coordinates along the major (i.e., X) axis of the ray ($r_0, r_1, r_2$) are determined. These vertex coordinates are compared to the modified culling bounds $t_{min}$ and $t_{max}$ that are measured along the major axis ($t'_{min}, t'_{max}$). In Figure 12, the vertex coordinates along the major axis are all less than the component of $t'_{min}$ when measured along the major axis. Thus, it can be determined that the primitive 1202 lies outside of the valid intersection range for the ray. This means that it can be determined that there is not an intersection between the ray and the primitive. The primitive can therefore be culled, such that further intersection testing is not performed on it.

An advantage of the methods described herein may be gained if one or more edges are shared by a plurality of primitives. In these examples, the analysis of coordinates of vertices that define primitive edges may be used to cull all the primitives that share those edges. For example, for the method in Figure 5 which comprises culling a primitive based on the orientation of a single edge of that primitive, the method may be used to cull all the primitives that share that edge. This culling of multiple primitives may be obtained by storing references that link primitives to the edges that define them. Similarly, the analysis of the coordinates of a vertex that is shared by multiple edges/primitives may be used to reduce the cost of the analysis of every edge/primitive that shares that vertex. That is, the vertex analysis described herein may be performed upfront, rather than once per edge (per primitive) or per primitive. The results of vertex analysis (otherwise referred to as intermediate results) may be stored in memory in or local to the testing unit. The results may be fetched using a reference for each primitive that points to the vertices that define that primitive, or alternatively by using a respective reference for each edge of a primitive that points to the vertices that define that edge.

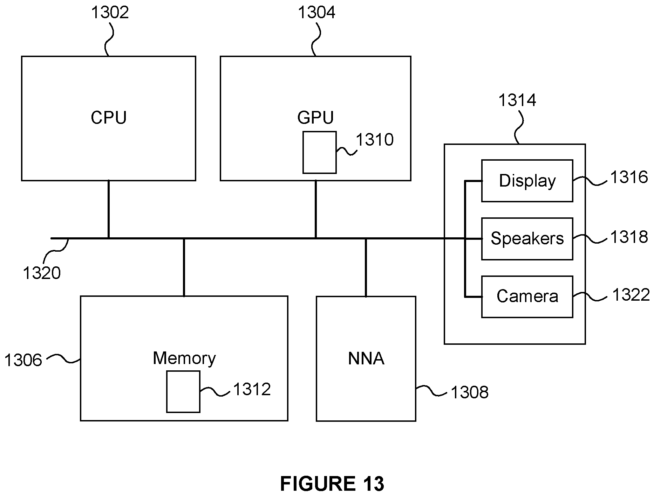

Figure 13 shows a computer system in which the graphics processing systems described herein may be implemented. The computer system comprises a CPU 1302, a GPU 1304, a memory 1306, a neural network accelerator (NNA) 1308 and other devices 1314, such as a display 1316, speakers 1318 and a camera 1322. A processing block 1310 is implemented on the GPU 1304. In other examples, one or more of the depicted components may be omitted from the system, and/or the processing block 1310 may be implemented on the CPU 1302 or within the NNA 1308. The components of the computer system can communicate with each other via a communications bus 1320. A store 1312 is implemented as part of the memory 1306.

The modules of Figures 1, 4 and 6 are shown as comprising a number of functional blocks. This is schematic only and is not intended to define a strict division between different logic elements of such entities. Each functional block may be provided in any suitable manner. It is to be understood that intermediate values described herein as being formed by an intersection testing module need not be physically generated by the intersection testing module at any point and may merely represent logical values which conveniently describe the processing performed by the intersection testing module between its input and output.

The intersection testing module described herein may be embodied in hardware on an integrated circuit. The intersection testing module described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture an intersection testing module configured to perform any of the methods described herein, or to manufacture an intersection testing module comprising any apparatus described herein. An integrated circuit definition dataset may be, for example, an integrated circuit description.

Therefore, there may be provided a method of manufacturing, at an integrated circuit manufacturing system, an intersection testing module as described herein. Furthermore, there may be provided an integrated circuit definition dataset that, when processed in an integrated circuit manufacturing system, causes the method of manufacturing an intersection testing module to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture an intersection testing module will now be described with respect to Figure 8.

Figure 8 shows an example of an integrated circuit (IC) manufacturing system 1402 which is configured to manufacture an intersection testing module as described in any of the examples herein. In particular, the IC manufacturing system 1402 comprises a layout processing system 1404 and an integrated circuit generation system 1406. The IC manufacturing system 1402 is configured to receive an IC definition dataset (e.g. defining an intersection testing module as described in any of the examples herein), process the IC definition dataset, and generate an IC according to the IC definition dataset (e.g. which embodies an intersection testing module as described in any of the examples herein). The processing of the IC definition dataset configures the IC manufacturing system 1402 to manufacture an integrated circuit embodying an intersection testing module as described in any of the examples herein.

The layout processing system 1404 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1404 has determined the circuit layout it may output a circuit layout definition to the IC generation system 1406. A circuit layout definition may be, for example, a circuit layout description.

The IC generation system 1406 generates an IC according to the circuit layout definition, as is known in the art. For example, the IC generation system 1406 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1406 may be in the form of computer-readable code which the IC generation system 1406 can use to form a suitable mask for use in generating an IC.

The different processes performed by the IC manufacturing system 1402 may be implemented all in one location, e.g. by one party. Alternatively, the IC manufacturing system 1402 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture an intersection testing module without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 8 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 8, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A method of performing intersection testing of a ray in respect of a primitive in a ray tracing system, the primitive being defined by an ordered set of vertices, the method comprising:

   receiving (i) data defining a direction and an origin of the ray to be tested against the primitive, and (ii) coordinate data for a set of two or more of the vertices, the set of two or more vertices defining at least one edge of the primitive;
   projecting the coordinate data for the set of two or more vertices into ray space using the ray data, wherein the ray space has two non-parallel axes that are both transverse to the direction of the ray, wherein a ray-space frame of reference associated with the two non-parallel axes is centred at a point on the ray such that the ray is represented as that point on the two non-parallel axes in the ray space, and wherein the point is an origin of the ray space;
   analysing signs of the coordinate data for the set of two or more vertices in ray space to determine whether a non-intersection condition is fulfilled, wherein fulfilment of the non-intersection condition indicates that the ray does not intersect the primitive; and
   in response to determining that the non-intersection condition is fulfilled, determining that the ray does not intersect the primitive.

2. A method of performing intersection testing of a ray in respect of a primitive in a ray tracing system, the primitive being defined by an ordered set of vertices, the method comprising:

   receiving (i) data defining a direction and an origin of the ray to be tested against the primitive, and (ii) coordinate data for a set of two or more of the vertices, the set of two or more vertices defining at least one edge of the primitive;
   projecting the coordinate data for the set of two or more vertices into ray space using the ray data, wherein the ray space has two non-parallel axes that are both transverse to the direction of the ray, wherein a ray-space frame of reference associated with the two non-parallel axes is centred at a point on the ray such that the ray is represented as that point on the two non-parallel axes in the ray space, and wherein the point is an origin of the ray space;
   analysing signs of the coordinate data for the set of two or more vertices in ray space to determine whether a non-intersection condition is fulfilled, wherein fulfilment of the non-intersection condition indicates that the ray does not intersect the primitive; and
   in response to determining that the non-intersection condition is not fulfilled, performing further intersection testing in respect of the ray on the primitive.

3. The method of claim 1 or claim 2, wherein said analysing signs of the coordinate data for the set of two or more vertices in ray space is performed without having previously performed any floating-point calculations as part of the intersection testing of the ray in respect of the primitive.

4. The method of any preceding claim, wherein said analysing signs of the coordinate data for the set of two or more vertices in ray space indicates whether the at least one edge of the primitive has crossed an axis of the two non-parallel axes in ray space.

5. The method of any preceding claim, further comprising performing a zero comparison on the coordinate data for each vertex of the set of two or more vertices.

6. The method of any preceding claim, wherein the set of two or more vertices comprises a first pair of vertices that defines a first edge of the primitive, and wherein said analysing signs of the coordinate data for the set of two or more vertices in ray space comprises determining whether:

the sign of a first coordinate for a first vertex of the first pair of vertices, in ray space, is different from the sign of a first coordinate for a second vertex of the first pair of vertices and that the sign of a second coordinate for the first vertex of the first pair of vertices, in ray space, is the same as the sign of a second coordinate for the second vertex of the first pair of vertices; or

the sign of the second coordinate for the first vertex of the first pair of vertices, in ray space, is different from the sign of the second coordinate for the second vertex of the first pair of vertices and that the sign of the first coordinate for the first vertex of the first pair of vertices, in ray space, is the same as the sign of the first coordinate for the second vertex of the first pair of vertices, optionally wherein the non-intersection condition is fulfilled if the orientation of the first edge of the primitive matches a predetermined orientation, the predetermined orientation indicating that the ray does not intersect a primitive comprising an edge that has that orientation.

7. The method of claim 6, wherein the analysis of the signs of the coordinate data for first pair of vertices in ray space is used to determine the orientation of the first edge of the primitive,
optionally wherein the orientation of the first edge of the primitive is defined according to an orientation of the two non-parallel axes, the orientation of two non-parallel axes being indicated by a data flag that is used to translate the coordinates of the first pair of vertices in ray space.

8. The method of claim 6, wherein the set of two or more vertices is a set of three or more vertices forming at least two pairs of vertices, the first pair of vertices defining the first edge of the primitive and a second pair of vertices defining a second edge of the primitive, and wherein said analysing signs of the coordinate data for the set of two or more vertices in ray space comprises determining whether:

the sign of a first coordinate for a first vertex of the second pair of vertices, in ray space, is different from the sign of a first coordinate for a second vertex of the second pair of vertices and that the sign of a second coordinate for the first vertex of the second pair of vertices, in ray space, is the same as the sign of a second coordinate for the second vertex of the second pair of vertices; or
the sign of the second coordinate for the first vertex of the second pair of vertices, in ray space, is different from the sign of the second coordinate for the second vertex of the second pair of vertices and that the sign of the first coordinate for the first vertex of the second pair of vertices, in ray space, is the same as the sign of the first coordinate for the second vertex of the second pair of vertices.

9. The method of claim 8, wherein the analysis of the signs of the coordinate data for the first and second pair of vertices in ray space is used to determine the orientations of the first and second edges of the primitive, optionally wherein the non-intersection condition is fulfilled if the orientation of the first edge of the primitive is different from the orientation of the second edge of the primitive.

10. The method of any of claims 1 to 5 wherein the set of two or more vertices is a complete set of ordered vertices that define the primitive.

11. The method of claim 10, wherein said analysing signs of the coordinate data for the set of two or more vertices in ray space comprises analysing the signs of at least a first coordinate, in ray space, for all of the vertices in the complete set of vertices that define the primitive, optionally wherein the non-intersection condition is fulfilled if at least one of the following is true:

the sign of a first coordinate, in ray space, is the same for all of the vertices in the complete set of ordered vertices; or
the sign of a second coordinate, in ray space, is the same for all of the vertices in the complete set of ordered vertices.

12. An intersection testing module for performing intersection testing of a ray in respect of a primitive in a ray tracing system, the primitive being defined by an ordered set of vertices, the intersection testing module being configured to:

receive (i) data defining a direction and an origin of the ray to be tested against the primitive, and (ii) coordinate data for a set of two or more of the vertices, the set of two or more vertices defining at least one edge of the primitive;
project the coordinate data for the set of two or more vertices into ray space using the ray data, wherein the ray space has two non-parallel axes that are both transverse to the direction of the ray, wherein a ray-space frame of reference associated with the two non-parallel axes is centred at a point on the ray such that the ray is represented as that point on the two non-parallel axes in the ray space, and wherein the point is an origin of the ray space; analyse signs of the coordinate data for the set of two or more vertices in ray space to determine whether a non-intersection condition is fulfilled, wherein fulfilment of the non-intersection condition indicates that the ray does not intersect the primitive; and

in response to determining that the non-intersection condition is fulfilled, determine that the ray does not intersect the primitive.

13. The intersection testing module of claim 12 wherein the intersection testing module is further configured to, in response to determining that the non-intersection condition is not fulfilled, perform further intersection testing in respect of the ray on the primitive.

14. Computer readable code configured to cause the method of any of claims 1 to 11 to be performed when the code is run.

15. A computer readable storage medium having stored thereon an integrated circuit definition dataset that, when processed in an integrated circuit manufacturing system, configures the integrated circuit manufacturing system to manufacture an intersection testing module as claimed in claim 12 or 13.

**FIGURE 1**

**FIGURE 2**

**FIGURE 3**

S402

Receive data defining a direction and an origin of a ray to be tested against the primitive

S404

Receive coordinate data for a set of two or more vertices that define at least one edge of the primitive

S406

Project coordinate data for the set of two or more vertices into ray space using the ray data

416

S408

Analyse signs of the coordinate data for the set of two or more vertices in ray space against intersection condition

S410

Is non-intersection condition fulfilled?

YES

NO

S412

Determine that ray does not intersect the primitive

S414

Submit primitive for further intersection testing

**FIGURE 4**

S502

$p_0 > 0 \wedge p_1 < 0$
$\vee$
$p_0 < 0 \wedge p_1 > 0$

YES

NO

S504

$q_0 > 0 \wedge q_1 > 0$
$\vee$
$q_0 < 0 \wedge q_1 < 0$

S506

$q_0 > 0 \wedge q_1 < 0$
$\vee$
$q_0 < 0 \wedge q_1 > 0$

YES

YES

Determine edge orientation — S508

S510

Does edge orientation match predetermined orientation?

NO

NO

YES

NO

Determine that ray does not intersect the primitive — S512

S514

Submit primitive for further intersection testing

FIGURE 5

S602

$$p_0 > 0 \wedge p_1 < 0$$
$$\vee$$
$$p_0 < 0 \wedge p_1 > 0$$

YES

NO

S604

$$q_0 > 0 \wedge q_1 > 0$$
$$\vee$$
$$q_0 < 0 \wedge q_1 < 0$$

YES

S606

$$q_0 > 0 \wedge q_1 < 0$$
$$\vee$$
$$q_0 < 0 \wedge q_1 > 0$$

S610

$$p_2 > 0 \wedge p_0 < 0$$
$$\vee$$
$$p_2 < 0 \wedge p_0 > 0$$

YES

NO

S612

$$q_2 > 0 \wedge q_0 > 0$$
$$\vee$$
$$q_2 < 0 \wedge q_0 < 0$$

NO

YES

S614

$$q_2 > 0 \wedge q_0 < 0$$
$$\vee$$
$$q_2 < 0 \wedge q_0 > 0$$

NO

YES

NO

Determine orientations of the first and second edges    S616

Are the orientations the same?    S618

YES

NO

NO

Determine that ray does not intersect the primitive    S620

Submit primitive for further intersection testing

S622

**FIGURE 6**

**FIGURE 7**

**FIGURE 8**

S902

max{$p_0$, $p_1$, $p_2$} < 0

YES

NO

YES

min{$p_0$, $p_1$, $p_2$} > 0    S904

NO

YES

max{$q_0$, $q_1$, $q_2$} < 0    S906

NO

YES

min{$q_0$, $q_1$, $q_2$} > 0    S908

NO    S910

S912

Determine that ray does not intersect the primitive

Submit primitive for further intersection testing

**FIGURE 9**

Q

$v_1$

1002

P

$v_0$

1004

$v_2$

**FIGURE 10**

S1102

S1104

Receive data defining a
direction and an origin of a ray
to be tested against the
primitive

Receive coordinate data for a set
of three or more vertices that
define the primitive

S1106

Use coordinate data of each vertex
to determine a distance of that
vertex along the length of the ray

S1108

Compare the determined
distances of each of the vertices
to $t_{min}$ and/or $t_{max}$

S1110

Are all of the
determined distances for
the vertices $<t_{min}$?

NO

S1112

YES

Are all of the
determined distances for
the vertices $>t_{max}$?

YES

S1114

NO

S1116

Determine that ray does not
intersect the primitive

Submit primitive for further
intersection testing

FIGURE 11

**FIGURE 12**

1302

1304

1314

CPU

GPU

1310

Display — 1316

Speakers — 1318

Camera — 1322

1320

1306

Memory

1312

NNA

1308

**FIGURE 13**

1402

1404    1406

IC definition
dataset → Layout
processing → Circuit layout
definition → Integrated
circuit
generation → Integrated
circuit

**FIGURE 14**

**EUROPEAN SEARCH REPORT**

Application Number

EP 24 20 2861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 064 201 A2 (IMAGINATION TECH LTD [GB]) 28 September 2022 (2022-09-28)<br>* abstract *<br>* paragraphs [0129] - [0132], [0152]; figure 3 *<br>* paragraphs [0146] - [0148] *<br>* paragraph [0186]; figure 9 * | 1-15 | INV.<br>G06T15/06<br>G06T15/40 |
| X | EP 4 064 199 A2 (IMAGINATION TECH LTD [GB]) 28 September 2022 (2022-09-28)<br>* abstract *<br>* paragraphs [0103] - [0108]; figure 3 *<br>* paragraphs [0121] - [0123] *<br>* paragraph [0162]; figure 9 * | 1-15 | |
| X | EP 4 064 200 A2 (IMAGINATION TECH LTD [GB]) 28 September 2022 (2022-09-28)<br>* abstract *<br>* paragraphs [0104] - [0109]; figure 3 *<br>* paragraphs [0122] - [0124] *<br>* paragraph [0162]; figure 9 * | 1-15 | |
| | | | **TECHNICAL FIELDS SEARCHED (IPC)** |
| A | Beveridge Ross ET AL: "Lecture 15: Ray Polygon Intersection",<br>CSU CS 410 Fall 2016,<br>18 October 2016 (2016-10-18), pages 1-24,<br>XP093259407,<br>Colorado State University, USA<br>Retrieved from the Internet:<br>URL:https://www.cs.colostate.edu/~cs410/yr2016fa/more_progress/cs410_F16_Lecture15.pdf<br>* slides 21 and 22 * | 1-15 | G06T |

The present search report has been drawn up for all claims

| Place of search | Date of completion of the search | Examiner |
|---|---|---|
| Berlin | 14 March 2025 | Bouchaâla, Nicolas |

## ANNEX TO THE EUROPEAN SEARCH REPORT
## ON EUROPEAN PATENT APPLICATION NO.

EP 24 20 2861

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | | Publication date | Patent family member(s) | | Publication date |
|---|---|---|---|---|---|
| EP 4064201 | A2 | 28-09-2022 | CN | 115115760 A | 27-09-2022 |
| | | | EP | 4064201 A2 | 28-09-2022 |
| | | | GB | 2599187 A | 30-03-2022 |
| | | | US | 2022351459 A1 | 03-11-2022 |
| | | | US | 2025037349 A1 | 30-01-2025 |
| EP 4064199 | A2 | 28-09-2022 | CN | 115115757 A | 27-09-2022 |
| | | | EP | 4064199 A2 | 28-09-2022 |
| | | | GB | 2599184 A | 30-03-2022 |
| | | | US | 2022351457 A1 | 03-11-2022 |
| | | | US | 2023186547 A1 | 15-06-2023 |
| EP 4064200 | A2 | 28-09-2022 | CN | 115115759 A | 27-09-2022 |
| | | | CN | 117689794 A | 12-03-2024 |
| | | | EP | 4064200 A2 | 28-09-2022 |
| | | | GB | 2599186 A | 30-03-2022 |
| | | | US | 2022351458 A1 | 03-11-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2315023 A